(19) Europäisches Patentamt
European Patent Office
Office européen des brevets

(11) Veröffentlichungsnummer: **0 249 015**
**B1**

(12) **EUROPÄISCHE PATENTSCHRIFT**

(45) Veröffentlichungstag der Patentschrift: **27.06.90**

(51) Int. Cl.$^5$: **C 07 F 7/08,** A 01 N 55/00

(21) Anmeldenummer: **87105842.6**

(22) Anmeldetag: **21.04.87**

# (54) Neue Silanderivate, Verfahren zu ihrer Herstellung, sie enthaltende Mittel und ihre Verwendung als Schädlingsbekämpfungsmittel.

(30) Priorität: **31.05.86 DE 3618354**

(43) Veröffentlichungstag der Anmeldung:
**16.12.87 Patentblatt 87/51**

(45) Bekanntmachung des Hinweises auf die Patenterteilung:
**27.06.90 Patentblatt 90/26**

(84) Benannte Vertragsstaaten:
**AT BE CH DE ES FR GB GR IT LI NL**

(56) Entgegenhaltungen:
**EP-A-0 077 962**

(73) Patentinhaber: **HOECHST AKTIENGESELLSCHAFT**
**Postfach 80 03 20**
**D-6230 Frankfurt am Main 80 (DE)**

(72) Erfinder: **Schubert, Hans Herbert, Dr.**
**Geisenheimer Strasse 95**
**D-6000 Frankfurt am Main 71 (DE)**
Erfinder: **Salbeck, Gerhard, Dr.**
**Frankfurter Strasse 34**
**D-6238 Hofheim am Taunus (DE)**
Erfinder: **Lüders, Walter, Dr.**
**Feldbergstrasse 16**
**D-6056 Heusenstamm (DE)**
Erfinder: **Knauf, Werner, Dr.**
**Im Kirschgarten 24**
**D-6239 Eppstein/Taunus (DE)**
Erfinder: **Waltersdorfer, Anna, Dr.**
**Rauenthaler Weg 28**
**D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Courier Press, Leamington Spa, England.

**Beschreibung**

Die bisher bekannten Grundstrukturen insektizider, akarizider und nematozider Wirkstoffe umfassen so unterschiedliche Substanzgruppen wie z.B. die Phosphorsäurederivate, die Chlorkohlenwasserstoffe, die N-Methylcarbamate, die Cyclopropancarbonsäureester und die Benzoylharnstoffe, um nur einige der wichtigsten zu nennen. Erstaunlicherweise sind jedoch zur Zeit (mit einer einzigen Ausnahme, s. Japanische Offenlegung Nr. 60 123 491) noch keinerlei insektizide, akarizide und nematozide Verbindungen beschrieben, die ein das Element Silicium enthaltendes Grundgerüst besitzen (C. Worthing, The Pesticide Manual, 7. Ausgabe, Lavenham 1983; S. Pawlenko, Organo-Silicium-Verbindungen, in: Methoden der org. Chemie (Houben-Weyl), Band XIII/5, Georg Thieme Verlag, Stuttgart 1980; R. Wegler, Chemie der Pflanzenschutz- und Schädlingsbekämpfungsmittel, Bde. 1, 6 und 7, Springer-Verlag, Berlin 1970, 1981).

Auf dem Herbizid-Sektor beschreibt EP—A 77 962 Trifluormethylphenoxy-phenyl-silicium-Derivate und deren Verwendung als Herbizide und Pflanzenwachstumsregulatoren. Triazolfungizide mit siliciumhaltiger Basisstrucktur sind aus der EP—A 68 813 bekannt.

Es wurden nun neue Wirkstoffe mit einer siliciumhaltigen Grundstruktur auf dem Gebiet der Insektizide, Akarizide und Nematozide mit vorteilhaften Anwendungseigenschaften gefunden.

Gegenstand der vorliegenden Erfindung sind daher die Verbindungen der Formel (I), ihre verschiedenen optischen Isomeren und deren möglichen Gemische,

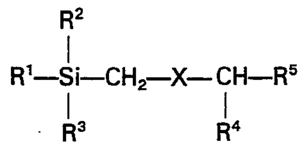

(I),

worin

$X = CH_2$ oder 0,

$R^1$ = einen Pyridyl- oder Pyrimidylrest der Formeln (A) oder (B) bedeutet,

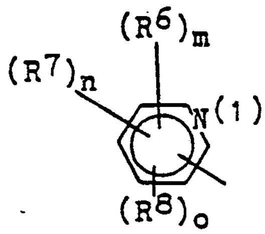

(A)

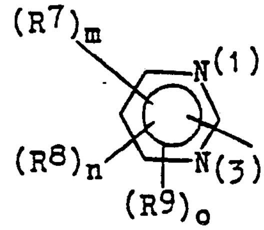

(B)

worin

m, n, o eine Zahl von 0 bis 2, mit der Maßgabe daß $0 \leq m + n + o \leq 3$ ist,

$R^6$, $R^7$, $R^8$, $R^9$ unabhängig voneinander Halogen, $(C_1—C_4)$Alkyl, $(C_1—C_3)$Alkoxy, $(C_1—C_3)$Halogenalkyl oder $(C_1—C_3)$Halogenalkoxy oder zwei der Reste $R^6$, $R^7$, $R^8$, $R^9$, wenn sie orthoständig zueinanderstehen einen Methylendioxy-, Ethylendioxy- oder $(C_3—C_5)$Alkylenrest,

$R^2$, $R^3$ = $(C_1—C_3)$Alkyl, $(C_2—C_8)$Alkenyl oder $R^2$ und $R^3$ eine Alkylenkette, die — zusammen mit dem Siliciumatom — einen unsubstituierten oder $(C_1—C_4)$alkylsubstituierten Heterocyclus mit vier bis sechs Ringgliedern ergibt,

$$R^4 = —H, —CN, —CCl_3, —C\equiv CH, (C_1—C_4)Alkyl, F, —\underset{\underset{S}{\|}}{C}—NH_2,$$

und

$R^5$ = einen substituierten Phenylrest der Formel (C) bedeuten,

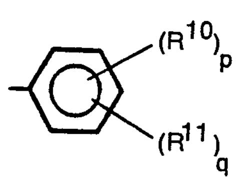

(C)

worin $R^{10}$ und $R^{11}$ — unabhängig voneinander — Halogen, $(C_1—C_4)$Alkyl, $(C_1—C_4)$Alkoxy, $(C_1—C_4)$Halogenalkyl, Phenyl, N-Pyrrolyl oder eine Gruppe der allgemeinen Formel (D) bedeuten kann,

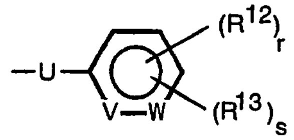 (D)

worin $R^{12}$ und $R^{13}$ = unabhängig voneinander H, Halogen, ($C_1$—$C_4$)Alkyl, ($C_1$—$C_4$)Alkoxy und ($C_1$—$C_4$)Halogenalkyl; U = —$CH_2$—, >C=O, —O— oder —S—, bevorzugt —O—; V, W = CH oder N, wobei beide gleichzeitig CH aber nicht gleichzeitig N bedeuten können, und wobei in Formeln (C) und (D)

p, q = eine ganze Zahl von 0 bis 5 mit der Bedingung, daß die Summe p + q eine Zahl von 1 bis 5 bedeuten muß,

r, s = 0, 1 oder 2, mit der Bedingung, daß die Summe von r + s = 0, 1 oder 2 sein muß, und der Bedingung, daß, falls $R^{10}$ oder $R^{11}$ der Gruppierung (D) entspricht, p, q = 0 oder 1 und p + q = 1 oder 2 bedeuten muß oder $R^5$ eine Pyridyl-Gruppe der Formel E

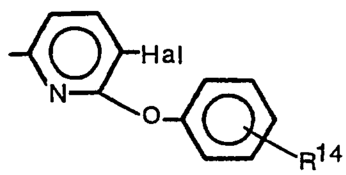 (E),

worin $R^{14}$ = Halogen außer J, ($C_1$—$C_4$)Alkyl, ($C_1$—$C_4$)Alkoxy oder ($C_1$—$C_4$)Halogenalkyl und Hal = Halogen, insbesondere Fluor, oder H bedeutet.

Bevorzugt sind solche Verbindungen, bei denen

$R^2$, $R^3$ = ($C_1$—$C_3$)Alkyl oder $R^2$ und $R^3$ zusammen eine ($C_3$—$C_5$)Alkylenkette und

$R^4$ = H, —CN oder ($C_1$—$C_4$)Alkyl bedeuten.

Insbesondere bevorzugt sind diejenigen Verbindungen der Formel I, worin $R^1$ einen ein- oder zweifach substituierten Pyridyl- oder Pyrimidyl-Rest bedeutet, wobei der Pyridylrest in Position 2 oder 3 und der Pyrimidyl-Rest in Position 2 oder 5 an das Si-Atom gebunden ist, und die Substituenten $R^6$, $R^7$, $R^8$ oder $R^9$ para- oder metaständig zur Si-Verknüpfungsstelle orientiert sind; $R^2$, $R^3$ = $CH_3$, $R^4$ = H and $R^5$ einen Rest der Formel

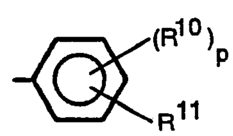

wobei $(R^{10})_p$ = H oder 4-Fluor und $R^{11}$ den Rest

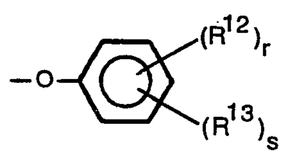

mit $R^{12}$, $R^{13}$ = Wasserstoff oder Halogen, insbesondere Fluor und r + s = 0, 1 oder 2, bedeuten.

Auch Verbindungen I, bei denen $R^5$ eine Pyridyl-Gruppe der Formel E

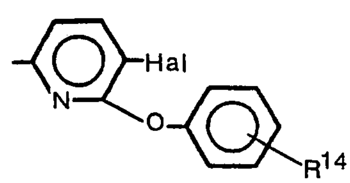 (E),

worin $R^{14}$ = Halogen außer J, ($C_1$—$C_4$)Alkyl, ($C_1$—$C_4$)Alkoxy oder ($C_1$—$C_4$)Halogenalkyl und Hal = Halogen, insbesondere Fluor, oder H bedeutet, besitzen als Wirkstoffe großes Interesse.

$R_6$—$R^9$ stehen insbesondere für F, Cl, Br, Methyl, Ethyl, Propyl, Methoxy, Ethoxy, Propoxy, i-Propoxy, Difluormethoxy, Trifluormethoxy, 1,1,2,2-Tetrafluorethoxy, 2,2,2-Trifluorethoxy, 1,1,2,3,3,3-Hexafluorpropoxy, 1,1,2-Trifluor-2-chlorethoxy, Trifluormethyl, 1,1,2,2-Tetrafluorethyl, Heptafluorpropyl, Methylendioxy und Ethylendioxy.

Substituierte Phenylreste für $R^5$ sind für die Erfindung von besonderer Wichtigkeit.

Als typische Beispiele für die Gruppe $R^5$ werden folgende Reste angegeben: Pentafluorphenyl, 5 - Benzyl - 3 - furyl, 4 - Phenoxyphenyl, 3 - Phenoxyphenyl, 3 - (4 - Fluorphenoxy)phenyl, 3 - (4 - Chlorphenoxy)phenyl, 3 - (4 - Bromphenoxy)phenyl, 3 - (3 - Fluorphenoxy)phenyl, 3 - (3 - Chlorphenoxy)phenyl, 3 - (3 - Bromphenoxy)phenyl, 3 - (2 - Fluorphenoxy)phenyl, 3 - (2 - Chlorphenoxy)phenyl, 3 - (2 - Bromphenoxy)phenyl, 3 - (4 - Methylphenoxy)phenyl, 3 - (3 - Methylphenoxy)phenyl, 3 - (2 - Methylphenoxy)phenyl, 3 - (4 - Methoxyphenoxy)phenyl, 3 - (3 - Methoxyphenyl)phenyl, 3 - (2 - Methoxyphenoxy)phenyl, 3 - (4 - Ethoxyphenoxy)phenyl, 3 - (Phenylthio)phenyl, 3 - (4 - Fluorphenylthio)phenyl, 3 - (3 - Fluorphenylthio)phenyl, 3 - Benzoylphenyl, 3 - Benzylphenyl, 3 - (4 - Fluorbenzyl)phenyl, 3 - (4 - Chlorbenzyl)phenyl, 3 - (3,5 - Dichlorphenoxy)phenyl, 3 - (3,4 - Dichlorphenoxy)phenyl, 3 - (4 - Chlor - 2 - methylphenoxy)phenyl, 3 - (2 - Chlor - 5 - methylphenoxy)phenyl, 3 - (4 - Chlor - 5 - methylphenoxy)phenyl, 3 - (4 - Ethylphenoxy)phenyl, 3 - (3 - Chlor - 5 - methoxyphenoxy)phenyl, 3 - (2,5 - Dichlorphenoxy)phenyl, 3 - (3,5 - Dichlorbenzoyl)phenyl, 3 - (3,4 - Dichlorbenzoyl)phenyl, 3 - (4 - Methylbenzyl)phenyl, 3 - (4 - Isopropoxyphenoxy)phenyl, 4 - Fluor - 3 - phenoxyphenyl, 4 - Chlor - 3 - phenoxyphenyl, 4 - Brom - 3 - phenoxyphenyl, 4 - Fluor - 3 - (4 - fluorphenoxy)phenyl, 4 - Fluor - 3 - (4 - chlorphenoxy)phenyl, 4 - Fluor - 3 - (4 - bromphenoxy)phenyl, 4 - Fluor - 3 - (4 - methylphenoxy)phenyl, 4 - Fluor - 3 - (4 - methoxyphenoxy)phenyl, 4 - Fluor - 3 - (3 - fluorphenoxy)phenyl, 4 - Fluor - 3 - (3 - chlorphenoxy)phenyl, 4 - Fluor - 3 - (3 - bromphenoxy)phenyl, 4 - Fluor - 3 - (3 - methoxyphenoxy)phenyl, 4 - Fluor - 3 - (4 - ethoxyphenoxy)phenyl, 4 - Fluor - 3 - (2 - fluorphenoxy)phenyl, 3 - Methoxy - 5 - phenoxyphenyl, 2 - Fluor - 3 - phenoxyphenyl, 2 - Fluor - 3 - (4 - fluorphenoxy)phenyl, 2 - Fluor - 3 - (3 - fluorphenoxy)phenyl, 2 - Fluor - 3 - (2 - fluorphenoxy)phenyl, 3 - Fluor - 5 - (4 - fluorphenoxy)phenyl, 3 - Fluor - 5 - (3 - fluorphenoxy)phenyl, 3 - Fluor - 5 - (2 - fluorphenoxy)phenyl, 4 - Methyl - 3 - phenoxyphenyl, 3 - Fluor - 5 - (4 - methoxyphenoxy)phenyl, 3 - Fluor - 5 - (3 - methoxyphenoxy)phenyl, 2 - Fluor - 5 - (4 - fluorphenoxy)phenyl, 2 - Fluor - 5 - (3 - fluorphenoxy)phenyl, 2 - Fluor - 5 - (2 - fluorphenoxy)phenyl, 2 - Chlor - 3 - phenoxyphenyl, 3 - Fluor - 5 - phenoxyphenyl, 2 - Fluor - 5 - phenoxyphenyl, 2 - Chlor - 5 - phenoxyphenyl, 2 - Brom - 5 - phenoxyphenyl, 4 - Chlor - 3 - (3 - methylphenoxy)phenyl, 4 - Chlor - 3 - (4 - fluorphenoxy)phenyl, 3 - Chlor - 5 - phenoxyphenyl, 3 - Brom - 5 - phenoxyphenyl, 4 - Brom - 3 - phenoxyphenyl, 4 - Trifluormethyl - 3 - phenoxyphenyl, 4 - Fluor - 3 - phenylthiophenyl, 4 - Fluor - 3 - benzylphenyl, 3 - (2 - Pyridyloxy)phenyl, 3 - (3 - Pyridyloxy)phenyl, 4 - Fluor - 3 - (2 - pyridyloxy)phenyl, 4 - Chlor - 3 - (2 - pyridyloxy)phenyl, 4 - Brom - 3 - (2 - pyridyloxy)phenyl, 4 - Methyl - 3 - (2 - pyridyloxy)phenyl, 4 - Fluor - 3 - (3 - pyridyloxy)phenyl, 4 - Chlor - 3 - (3 - pyridyloxy)phenyl, 4 - Brom - 3 - (3 - pyridyloxy)phenyl, 4 - Methyl - 3 - (3 - pyridyloxy)phenyl, 2 - Methyl - 3 - phenylphenyl, 2 - Methyl - 3 - (N - pyrrolyl)phenyl, 6 - Phenoxy - 2 - pyridyl, 6 - (4 - Fluorphenoxy) - 2 - pyridyl, 6 - (4 - Chlorphenoxy) - 2 - pyridyl, 6 - (4 - Bromphenoxy) - 2 - pyridyl, 6 - (4 - Methylphenoxy) - 2 - pyridyl, 6 - (4 - Methoxyphenoxy) - 2 - pyridyl, 6 - (4 - Ethoxyphenoxy) - 2 - pyridyl, 6 - (3 - Fluorphenoxy) - 2 - pyridyl, 6 - (3 - Chlorphenoxy) - 2 - pyridyl, 6 - (3 - Bromphenoxy) - 2 - pyridyl, 6 - (3 - Methoxyphenoxy) - 2 - pyridyl, 6 - (2 - Fluorphenoxy) - 2 - pyridyl, 6 - (2 - Chlorphenoxy) - 2 - pyridyl, 6 - (2 - Bromphenoxy) - 2 - pyridyl, 5 - Propargyl - 3 - furyl, N - Phthalimidyl, N - 3,4,5,6 - phthalimidyl, 2 - Methyl - 5 - propargyl - 3 - furyl, 4 - t - Butylphenyl, 4 - Methylphenyl, 4 - Isopropylphenyl, 4 - (2 - Chlor - 4 - trifluormethyl - 2 - pyridyloxy)phenyl, 4 - Cyclohexylphenyl, 4 - Difluormethoxyphenyl, 4 - Biphenylyl, 4 - Trimethylsilylphenyl und 4 - Phenoxy - 2 - thienyl.

Weitere typische Beispiele für die Gruppe

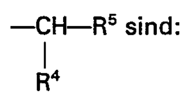

2-Allyl-3-methylcyclopent-2-en-1-on-4-yl, 4-Phenylindan-2-yl.

Gegenstand der vorliegenden Erfindung sind auch Verfahren zur Herstellung der Verbindungen der Formel I, dadurch gekennzeichnet, daß man

a) für Verbindungen mit X = $CH_2$ ein Silan der allgemeine Formel (II),

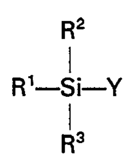

(II)

worin Y eine nucleofuge Abgangsgruppe wie beispielsweise Halogen oder Sulfonat bedeutet, mit einem metallorganischen Reagenz der allgemeinen Formel (III),

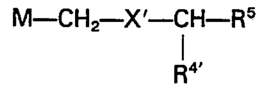

(III)

worin M ein Alkalimetall- oder Erdalkalimetall-Aequivalent, X′ eine Methylengruppe und $R^{4'}$ H oder $(C_1-C_4)$Alkyl bedeutet,

oder

b) ein Silan der allgemeinen Formel (IV) oder (V)

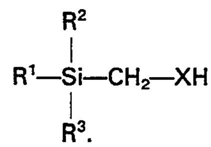

(IV)

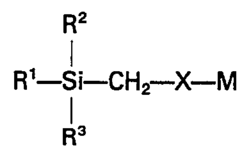

(V)

mit einem Alkylierungsmittel der allgemeinen Formel VI,

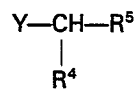

(VI)

gegebenenfalls in Gegenwart einer Base,

oder

c) ein Silan der allgemeinen Formel (VII)

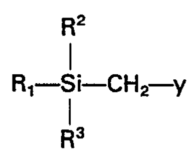

(VII)

mit einer XH-aciden Verbindung des Typs (VIII)

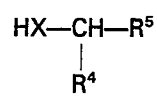

(VIII)

in Gegenwart einer Base oder mit einer metallorganischen Verbindung des Typs IX

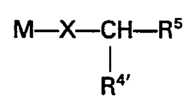

(IX)

oder

d) für Verbindungen mit X = $CH_2$ ein Silan der allgemeinen Formel (X)

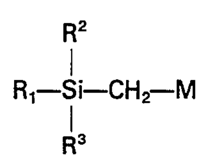

(X)

mit einer Verbindung des Typs (XI)

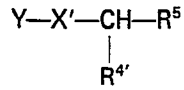

(XI)

oder

e) für Verbindungen mit X = $CH_2$ ein Silan der allgemeinen Formel (XII)

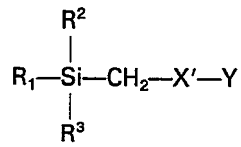

(XII)

mit einer metallorganischen Verbindung der allgemeinen Formel (XIII)

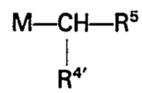

(XIII)

oder

f) ein Silan der allgemeinen Formel (XIV)

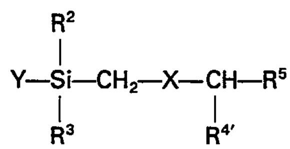

(XIV)

mit einem metallorganischen Reagenz des Typs (XV)

$$R^1—M \qquad (XV)$$

oder

g) ein Silan der allgemeinen Formel (XVI)

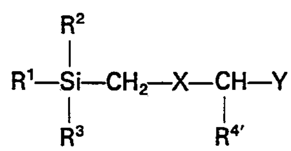

(XVI)

mit einem metallorganischen Reagenz des Typs (XVII)

$$M—R^5 \qquad (XVII),$$

gegebenenfalls in Gegenwart von Übergangsmetallkatalysatoren der I oder VIII Nebengruppe, wie z.B. CuBr oder $NiCl_2$,

oder

h) für Verbindungen mit X = $CH_2$ ein Silan der allgemeinen Formel (XXX)

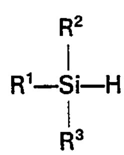

(XXX)

mit einem Olefin der allgemeinen Formel (XXXI)

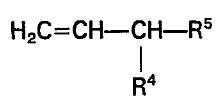

in Gegenwart einer Komplexvorbindung eines Elementes der VIII. Nebengruppe des Periodensystems als Katalysator

oder

i) für Verbindungen mit X = O ein Silan der allgemeinen Formel (XXXII)

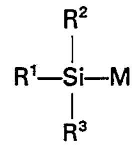

(XXXII)

mit einem Alkylierungsmittel der allgemeinen Formel (XXXIII)

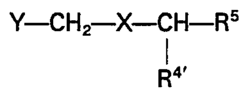

(XXXIII)

umsetzt.

Die als Ausgangsverbindungen beim Herstellungsverfahren a) zu verwendenden Silane der Formel (II) sind zum Teil neu und können nach literaturbekannten Verfahren hergestellt werden, indem man von einem Silan der allgemeinen Formel (XVIII), (XIX) oder (XX) ausgeht und die noch fehlenden organischen Reste mit Hilfe geeigneter metallorganischer Reagenzien einführt (siehe Methoden der org. Chemie (Houben-Weyl), Bd. XIII/5, Georg Thieme Verlag, Stuttgart, 1980),

$$Y_4Si + R{-}M \longrightarrow Y_3Si{-}R$$

(XVIII) (XIX)

$$Y_3SiR + R'M \longrightarrow R'Si(Y)_2R$$

(XIX) (XX)

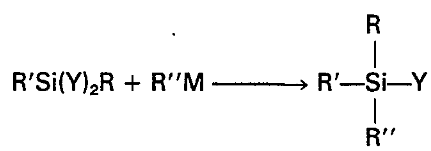

(XX) (II)

wobei R, R′, R″ den Resten $R^1$, $R^2$, $R^3$ entsprechenden und Y und M wie oben definiert sind.

Die als Ausgangsverbindungen beim Herstellungsverfahren a) zu verwendenden metallorganischen Reagenzien der allgemeinen Formel (III) sind zum Teil neu und lassen sich nach an sich literaturbekannten Verfahren herstellen, indem man eine Carbonylverbindung der allgemeinen Formel (XXI),

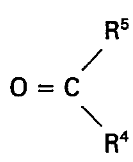

(XXI)

worin $R^4$ und $R^5$ wie oben definiert sind, zunächst nach Reformatskij (s. Methoden der org. Chemie (Houben-Weyl) Bd. XIII/2a, Georg Thieme Verlag, Stuttgart 1973), nach Wittig (s. M.d.org. Chem. (H.-W.), Bd. El, Georg Thieme Verlag, Stuttgart 1982) oder nach Horner (s. L. Horner, Fortschr. Chem. Forsch. *7/1*, 1 (1966/67)) in den entsprechenden α,β-ungesättigten Ester (XXII) überführt,

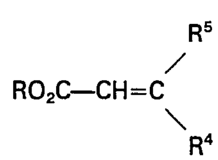

(XXII)

diesen dann nach Standardmethoden (s. Methoden der org. Chemie (Houben-Weyl), Bd. 4/1c und 4/1d, Georg Thieme Verlag, Stuttgart 1980 und 1981) zum Alkohol (XXIII) reduziert,

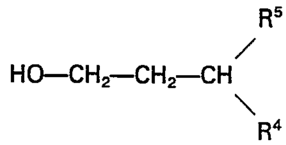

(XXIII)

und diesen dann nach Standardmethoden (s. Methoden der org. Chemie (Houben-Weyl), Bd. 5/3 und 5/4, Georg Thieme Verlag, Stuttgart 1960 und 1962) in ein geeignetes Halogenid (XXIV) umwandelt,

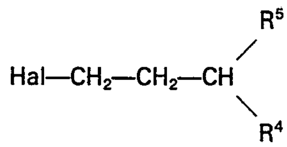

(XXIV)

das schließlich mit einem Alkali- oder Erdalkalimetall zu den benötigten metallorganischen Reagenzien vom Typ (III) abreagiert.

Die als Ausgangsverbindungen beim Herstellverfahren b) zu verwendenden Silane der allgemeinen Formel (IV) und (V) sind zum Teil neu und können nach an sich literaturbekannten Verfahren hergestellt werden (s. Methoden der org. Chemie (Houben-Weyl), Bd. XIII/5, Georg Thieme Verlag, Stuttgart 1980), indem man

1) ein Silan der allgemeinen Formel (XXV),

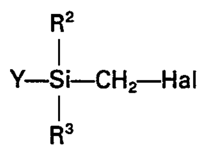

(XXV)

worin $R^2$, $R^3$ und Y wie oben definiert sind und Hal = Br oder Cl sein kann, mit einem metallorg. Reagenz der allgemeinen Formel (XV) umsetzt,

$$R^1—M \qquad (XV)$$

das Zwischenprodukt vom Typ (VII)

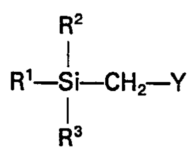

(VII)

Y = Hal

dann nach Standardmethoden (s. Methoden der org. Chemie (Houben-Weyl), Bd. 13/3a, Georg Thieme Verlag, Stuttgart 1982) in das Boran (XXVI) umwandelt,

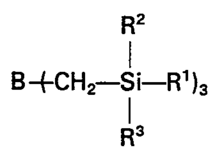

(XXVI)

und dieses schließlich nach literaturbekannten Methoden (s. Methoden der org. Chemie (Houben-Weyl), Bd. 13/3c, Georg Thieme Verlag, Stuttgart 1984) zu den gewünschten Verbindungen (IV) (X = O, S) spaltet.

2) ein Silan der allgemeinen Formel (XXVII),

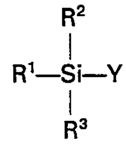

(XXVII)

worin Y = Hal oder

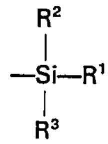

bedeutet, nach literaturbekannten Methoden (s. Methoden der org. Chemie (Houben-Weyl), Bd. XIII/5, Georg Thieme Verlag, Stuttgart 1980) mit einem Alkalimetall in das entsprechende metallierte Silan überführt und dann mit Formaldehyd umsetzt, wobei man Verbindungen des Typs (IV) X = O erhält.

3) ein Silan der allgemeinen Formel (XXVIII),

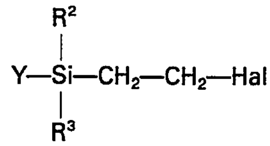 (XXVIII)

worin $R^2$, $R^3$ und Y wie weiter oben definiert sind und Hal = Cl, Br bedeutet, mit einem metallorganischen Reagenz der Formel (XV) umsetzt

$$R^1—M \qquad (XV)$$

und das entstehende Zwischenprodukt (XXIX)

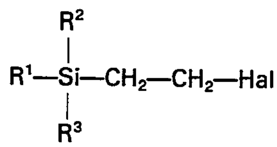 (XXIX)

mit einem Alkalimetall oder Erdalkalimetall zur Reaktion bringt, wobei man Verbindungen des Typs (V) mit X = $CH_2$ erhält.

Die als Ausgangsverbindungen beim Herstellverfahren c) zu verwendenden Silane der allgemeinen Formel (VII)

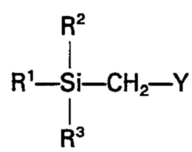 (VII)

lassen sich — für Y = Hal — wie weiter oben bereits beschrieben durch Umsetzung der Silane (XXV) mit metallorganischen Reagenzien (XV) darstellen.

Die Synthese der Verbindungen (VII) mit Y = Sulfonat erfolgt zweckmäßigerweise durch Veresterung der Alkohole vom Typ (IV).

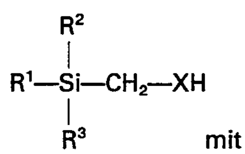 (IV)

mit X = O

mit Sulfonsäure resten, die nach den üblichen Methoden (s. Methoden der org. Chemie (Houben-Weyl), Bd. IX, Georg Thieme Verlag, Stuttgart 1955) durchgeführt wird.

Die als Ausgangsverbindungen beim Herstellungsverfahren h) zu verwendenden Silane der allgemeinen Formel XXX sind zum Teil neu und können nach an sich literaturbekannten Methoden hergestellten werden (s. Methoden der org. Chemie (Houben-Weyl), Bd. XIII/5, Georg Thieme Verlag, Stuttgart 1980), indem man

1) ein Silan der allgemeinen Formel XXXIV

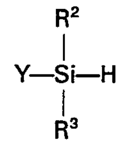

(XXXIV)

mit einem metallorganischen Reagenz der Formel XI

$R^1$—M (XI)

umsetzt, oder

2) ein Silan der allgemeinen Formel II

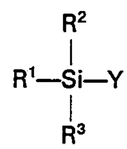

(II)

mit Metallhydriden wie z.B. Natriumhydrid oder Lithiumaluminiumhydrid reduziert.

Die als Ausgangsverbindungen beim Herstellverfahren h) zu verwedenden Olefine der allgemeinen Formel XXXI

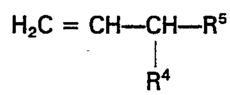

(XXXI)

können nach an sich literaturbekannten Methoden hergestellt werden, indem man ein Olefin der allgemeinen Formel XXXVa bzw. XXXVb

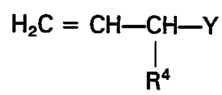

(XXXVa)

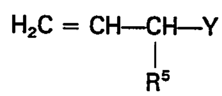

(XXXVb)

mit einem aus der entsprechenden Halogenverbindung erhältlichen metallorganischen Reagenz der allgemeinen Formel XXXVIa bzw. XXXVIb.

M—$R^5$ (XXXVIa)

M—$R^{4'}$ (XXXVIb),

gegebenenfalls in Gegenwart von Übergangsmetallkatalysatoren der I. oder VIII. Nebengruppe wie z.B. CuBr oder $NiCl_2$, umsetzt.

Die Verbindungen der Formel XXXI sind zum Teil neu. Gegenstand der vorliegenden Erfindung sind daher auch Verbindungen der Formel XXXI worin $R^4$ = H und $R^5$ = einen Rest der Formeln

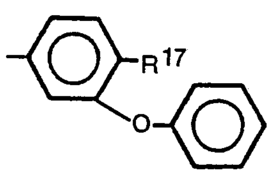 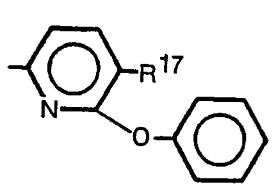 oder 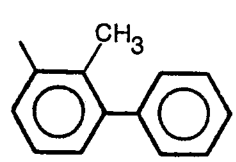 bedeutet.

$R^{17}$ steht für H oder Halogen, wobei Halogen insbesondere Fluor bedeutet.

Die als Ausgangsverbindungen beim Herstellverfahren i) zu verwendenden, metallierten Silane der allgemeinen Formel XXXII

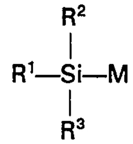

(XXXII)

sind zum Teil neu und lassen sich nach literaturbekannten Methoden aus den Edukten XXVII

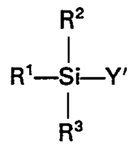

(XXVII),

worin Y' = Hal oder

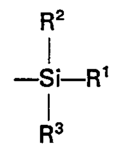

bedeutet, durch Umsetzung mit Alkalimetall erzeugen.

Die als Ausgangsverbindungen beim Herstellverfahren i) zu verwendenden Alkylierungsmittel XXXIII

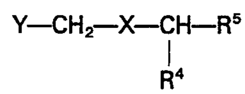

(XXXIII); $X \neq CH_2$

sind zum Teil ebenfalls neu und lassen sich nach literaturbekannten Methoden herstellen (s. z.B. Methoden der org. Chemie (Houben Weyl), Bd. V/3, Georg Thieme Verlag, Stuttgart 1962) indem man z.B. für X = O einen Alkohol der allgemeinen Formel XXXVII

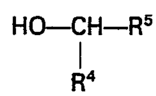

(XXXVII)

in Gegenwart von Paraformaldehyd mit einem Halogenierungsmittel wie z.b. Chlorwasserstoff, Bromwasserstoff oder Thionylchloride umsetzt.

Die weiteren, als Ausgangsverbindungen zu verwendenden Verbindungen der allgemeinen Formeln (VI), (VIII), (IX), (X), (XI), (XII), (XIII), (XIV), (XV), (XVI) und (XVII) sind ebenfalls zum Teil neu. Ihre Synthese erfolgt nach den im bisherigen Text zitierten Syntheseschritten (s. die bisher zitierte Literatur) oder aber nach Standardmethoden der org. Chemie. So lassen sich die metallorganischen Zwischenstufen beispielsweise durch Wasserstoff/Metallaustausch oder aber — bevorzugt — durch Halogen/Metallaustausch in allen seinen Varianten erzeugen.

Die genannten Verfahrensvarianten a) und d), e), f), g), i) werden bevorzugt in einem Verdünnungsmittel durchgeführt, dessen Natur von der Art des eingesetzten Metallorganyls abhängt. Als Verdünnungsmittel eignen sich insbesondere aliphatische und aromatische Kohlenwasserstoffe wie z.B. Pentan, Hexan, Heptan, Cyclohexan, Petrolether, Benzin, Ligroin, Benzol, Toluol und Xylol, Ether wie z.B. Diethyl- und Dibutylether, Glykoldimethylether, Diglykoldimethylether, Tetrahydrofuran und Dioxan, und schließlich alle möglichen Gemische aus den zuvor genannten Lösungsmitteln.

Die Reaktionstemperatur liegt bei den obengenannten Verfahrensvarianten zwischen −75°C und +150°C, vorzugsweise zwischen −75°C und +105°C. Die Ausgangsstoffe werden gewöhnlich in äquimolaren Mengen eingesetzt. Ein Ueberschuß der einen oder anderen Reaktionskomponente ist jedoch möglich.

Für die weiter oben genannten Verfahrensvarianten b) und c) gilt im wesentlichen das gleiche wie für die Varianten a) und d)—g). Bei Einsatz der Edukte vom Typ (IV) und (VIII) lassen sich jedoch noch weitere Verdünnungsmittel einsetzen. So eignen sich in diesen Fällen auch Ketone wie Aceton, Methylethyl-, Methylisopropyl-, und Methylisobutylketon, Ester wie Essigsäuremethylester und -ethylester, Nitrile wie z.B. Acetonitril und Propionitril, Amide wie z.B. Dimethylformamid, Dimethylacetamid und N-Methylpyrrolidon, sowie Dimethylsulfoxid, Tetramethylensulfon und Hexamethyl-phosphorsäuretriamid als Verdünnungsmittel. Als Basen finden anorganische Basen wie z.B. Alkali- oder Erdalkalimetallhydroxide, -hydride, -carbonate oder -hydrogencarbonate, aber auch organische Basen wie z.B. Pyridin, Triethylamin, N,N-Diisopropylethylamin oder Diazabicyclooctan Verwendung.

Die genannte Verfahrensvariante h) wird — im Gegensatz zu allen anderen Syntheseverfahren für Verbindungen der allgemeinen Formel I — bevorzugt ohne Verdünnungsmittel durchgeführt. Jedoch sind auch Lösungsmittel wie Cyclohexan, Petrolether, Benzol, Toluol, Tylol und andere als Reaktionsmedium

geeignet. Als Katalysatoren finden Komplexverbindungen der Elemente der VIII. Nebengruppe des Periodensystems Verwendung wie z.B. $H_2PtCl_6$, $Co_2(CO)_8$, $Rh_4(CO)_{12}$, $Ir_4(CO)_{12}$ oder $RhCl[P(C_6H_5)_3]_3$, (siehe Methoden der org. Chemie (Houben-Weyl), Bd. XIII/5, Georg Thieme Verlag, Stuttgart 1980, S. 51 ff. sowie dort zitierte Literatur). Das Verhältnis von Katalysator zu den umgesetzten Edukten hängt von der Art des Katalysators ab und variiert im Fallen von $H_2PtCl_6$ z.B. im Bereich $1:10^7$ bis $1:10^6$.

Die Isolierung und gegebenenfalls Reinigung der Verbindungen der Formel (I) erfolgt nach allgemein üblichen Methoden, z.B. durch Abdampfen des Lösungsmittels (gegebenenfalls unter vermindertem Druck) und anschließendes Destillieren oder Chromatographieren oder durch Verteilen des Rohproduktes zwischen zwei Phasen und die sich daran anschließende übliche Aufarbeitung.

Die Verbindungen der allgemeinen Formel (I) sind in den meisten organischen Lösungsmitteln gut löslich.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Naphotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Tricoplusia ni, Carpocapsa pomonella, Pieris spp., Chilo spp, Pyrausta nubilalis, Ephestia koehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogester, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllys spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae,

Eriophyes ribis, Phyllocoptruta oleivora, Boophilus spp. Rhipicephalus spp., Ablyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Weiterhin haben die Verbindungen eine ausgezeichnete Wirkung gegen pflanzenschädigende Nematoden, beispielsweise solche der Gattungen Meloidogyne, Heterodera, Ditylenchus, Aphelenchoides, Radopholus, Globodera, Pratylenchus, Longidorus und Xiphinema.

Gegenstand der Erfindung sind auch Mittel, die die Verbindungen der Formel I neben geeigneten Formulierungshilfsmitteln enthalten.

Die erfindungsgemäßen Mittel enthalten die Wirkstoffe der Formel I, im allgemeinen zu 1—95 Gew.-%. Sie können als Spritzpulver, emulgierbare Konzentrate, versprühbare Lösungen, Staübemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sonfonate und Dispergiermittel, a.B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Cadodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxyethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise — gewünschtenfalls in Mischung mit Düngemitteln — hergestellt werden.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, Formamidine, Zinnverbindungen, durch Mikroorganismen hergestellte Stoffe u.a. Bevorzugte Mischungspartner sind

1. aus der Gruppe der Phosphorsäureester Azinphos-ethyl, Azinphos-methyl, 1-(4-Chlorphenyl)-4-(O-ethyl, S-propyl)phosphoryloxypyrazol (TIA—230), Chlorpyrifos, Coumaphos, Demeton, Demeton-S-methyl, Diazinon, Dichlorvos, Dimethoat, Ethoprophos, Etrimfos, Fenitrothion, Fenthion, Heptenophos, Parathion, Parathion-methyl, Phosalon, Pirimiphos-ethyl, Pirimiphos-methyl, Profenofos, Prothiofos, Sulprofos, Triazophos, Trichlorphon.

2. aus der Gruppe der Carbamate Aldicarb, Bendiocarb, BPMC (2-(1-Methylpropyl)phenylmethyl-carbamat), Butocarboxim, Butoxicarboxim, Carbaryl, Carbofuran, Carbosulfan, Cloethocarb, Isoprocarb, Methomyl, Oxamyl, Primicarb, Promecarb, Propoxur, Thiodicarb.

3. aus der Gruppe der Carbonsäureester Allethrin, Alphametrin, Bioallethrin, Bioresmethrin, Cycloprothrin, Cyfluthrin, Cyhalothrin, Cypermethrin, Deltamethrin, 2,2-Dimethyl-3-(2-chlor-2-trifluor-methylvinyl)cyclopropancarbonsäure-(α-cyano-3-phenyl-2-methylbenzyl)ester (FMC 54800), Fenpropathrin, Fenfluthrin, Fenvalerat, Flucythrinate, Flumethrin, Fluvalinate, Permethrin, Resmethrin, Tralomethrin.

4. aus der Gruppe der Formamidine Amitraz, Chlordimeform.

5. aus der Gruppe der Zinnverbindungen Azocyclotin, Cyhexatin, Fenbutatinoxid.

6. Sonstige α- und β-Avermectine, Bacillus thuringiensis, Bensultap, Binapacryl, Bisclofentezin, Buprofecin, Cartap, Cyromacin, Dicofol, Endosulfan, Ethoproxyfen, Fenoxycarb, Hexythiazox, 3-[2-(4-Ethoxyphenyl)-2-methyl-propoxymethyl]-1,3-diphenylether (MTI-500), 5-[4-(4-Ethoxyphenyl)-4-methyl-pentyl]-2-fluoro-1,3-diphenylether (MTI-800), 3-(2-Chlorphenyl)-3-hydroxy-2-(2-phenyl-4-thiozolyl)propennitril (SN 72129), Thiocyclam, Kernpolyeder- und Granuloseviren.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,00001 und 1 Gew.-% liegen.

Die Anwendung geschieht in einer den Anwendungsformen angepaßten üblichen Weise.

Die erfindungsgemäßen Wirkstoffe eignen sich auch zur Bekämpfung von Ekto- und Endoparasiten vorzugsweise von ektoparasitierenden Insekten auf dem veterinärmedizinischen Gebiet bzw. auf dem Gebiet der Tierhaltung.

Die Anwendung der erfindungsgemäßen Wirkstoffe geschieht hier en bekannter Weise, wie durch

orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns.

Die jeweils geeigneten Dosierungen und Formulierungen sind insbesondere von der Art und dem Entwicklungsstadium der Nutztiere und auch vom Befallsdruck der Insekten abhängig und lassen sich nach den üblichen Methoden leicht ermitteln und festlegen. Die neuen Verbindungen können bei Rindern z.B. in Dosiermengen von 0,1 bis 100 mg/kg Körpergewicht eingesetzt werden.

Nachfolgende Beispiele dienen zur Erläuterung der Erfindung.

## A. Formulierungsbeispiele

a) Ein Stäubemittel wird erhalten, indem man 10 Gew.-Teile Wirkstoff und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat stellt man her, indem man 20 Gew.-Teile Wirkstoff mit 6 Gew.-Teilen Alkylphenolpolyglykolether (®Triton X 207), 3 Gew.-Teilen Isotridecanolpolyglykolether (8 AeO) und 71 Gew.-Teilen paraffinischem Mineralöl (Siederbereich z.B. ca. 255 bis über 377°C) mischt und in einer Reibkugelmühle auf eine Feinheit von unter 5 Mikron vermahlt.

d) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertes Nonylphenol (10 AeO) als Emulgator.

e) Ein Granulat läßt sich herstellen aus 2 bis 15 Gew.-Teilen Wirkstoff und einem inerten Granulatträgermaterial wie Attapulgit, Bimsgranulat und/oder Quarzsand.

## B. Chemische Beispiele

Herstellungsvorschrift

Zu 2,4 g (0,10 Mol) Magnesiumspänen in 10 ml wasserfreiem Tetrahydrofuran (THF) tropft man eine Mischung aus 18,2 g (0,09 Mol) 2-Ethoxy-5-brompyridin (aus 2,5-Dibrompyridin und Natriumethanolat in DMSO erhältlich), 11,4 g (0,12 Mol) Chlordimethylsilan und 50 ml wasserfreiem THF, wobei eine stark exotherme Reaktion erfolgt. Die Umsetzung wird durch zweistündiges Rückflußkochen vervollständigt. Dann gießt man auf Wasser und extrahiert mehrmals mit n-Hexan. Die Extrakte werden mit Wasser und gesättigter Kochsalzlösung gewaschen, getrocknet und eingedampft, der Rückstand destilliert. Man erhält 7 g (43%) 2-Ethoxy-5-dimethylsilylpyridin als farbloses Öl vom $Kp._7 = 140—150°C$.

Eine Mischung aus 3,6 g (20 mMol) 2-Ethoxy-5-dimethylsilylpyridin und 4,2 g (20 mMol) 3-Allyldiphenylether wird mit 2 Tropfen einer 30%igen Lösung von Hexachlorplatinsäure in Isopropanol versetzt. Nach leichtem Erwärmen setzt die exotherme Reaktion ein. Das erhaltene Rohprodukt wird einer Kugelrohrdestillation unterzogen und liefert 3,6 g (46%) (2-Ethoxypyrid-5-yl)-dimethyl-<3-(3-phenoxyphenyl)propyl>silan als farbloses Öl vom $Kp._{0,15} = 230°C$; $n_D^{20} = 1,5618$.

Gemäß dieser Vorschrift lassen sich die nachfolgend aufgeführten Verbindungen der Formel (I) mit $X = CH_2$ herstellen. Die nachfolgenden Verbindungen mit X = 0 lassen sich beispielsweise nach dem auf S. 8 beschriebenen Verfahren b) herstellen.

Et bedeutet jeweils Ethyl in der Tabelle.

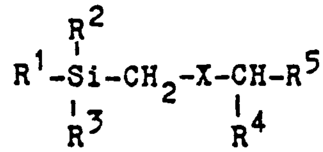

| Bsp. Nr. | $R^1$ | $R^2$ | $R^3$ | X | $R^4$ | $R^5$ | Physikalische Daten |
|---|---|---|---|---|---|---|---|
| 1 | 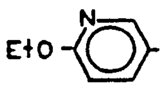 | $CH_3$ | $CH_3$ | $CH_2$ | H | 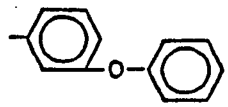 | $Kp._{0.15}$ = 230°C<br>$n_D^{20}$= 1.5618 |
| 2 | " | $CH_3$ | $CH_3$ | $CH_2$ | H | 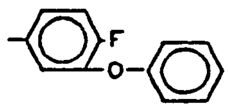 | $Kp._{0.15}$ = 220°C |
| 3 | " | $CH_3$ | $CH_3$ | $CH_2$ | H | 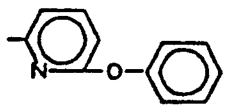 | $Kp._{0.2}$ = 235°C |
| 4 | " | $CH_3$ | $CH_3$ | $CH_2$ | H | 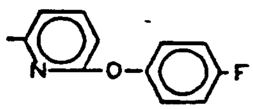 | |
| 5 | " | $CH_3$ | $CH_3$ | $CH_2$ | H | 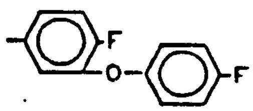 | $KP._{0.2}$ = 230°C |
| 6 | " | $CH_3$ | $CH_3$ | $CH_2$ | CN | 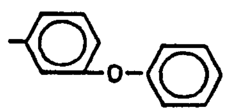 | blaßgelbes Öl; destilliert unter Zersetzung |
| 7 | " | $CH_3$ | $CH_3$ | $CH_2$ | H | 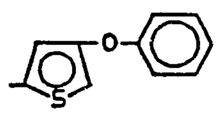 | |
| 8 | " | $CH_3$ | $CH_3$ | O | H | 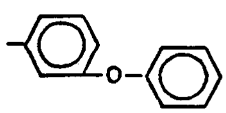 | $Kp._{0.1}$ = 230-235°C |
| 9 | " | $CH_3$ | $CH_3$ | O | H | 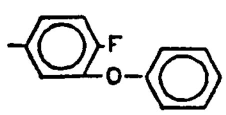 | $Kp._{0.05}$ = 205-210°C |
| 10 | " | $CH_3$ | $CH_3$ | O | H | 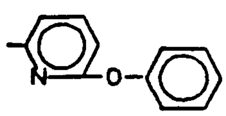 | $Kp._{0.2}$ = 235-240°C |
| 11 | " | $CH_3$ | $CH_3$ | O | H | 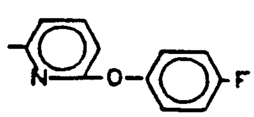 | |

| Bsp. Nr. | $R^1$ | $R^2$ | $R^3$ | X | $R^4$ | $R^5$ | Physikalische Daten |
|---|---|---|---|---|---|---|---|
| 12 | 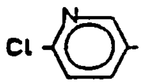 | $CH_3$ | $CH_3$ | $CH_2$ | H | 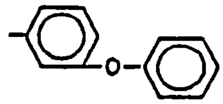 | $Kp._{0.2}$ = 225-230°C |
| 13 | " | $CH_3$ | $CH_3$ | $CH_2$ | H | 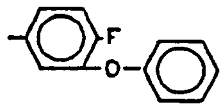 | $Kp._{0.2}$ = 220°C |
| 14 | " | $CH_3$ | $CH_3$ | $CH_2$ | H | 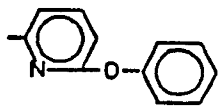 | |
| 15 | " | $CH_3$ | $CH_3$ | $CH_2$ | H | 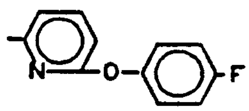 | |
| 16 | " | $CH_3$ | $CH_3$ | $CH_2$ | H | 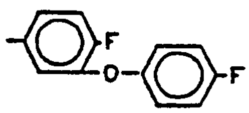 | |
| 17 | " | $CH_3$ | $CH_3$ | $CH_2$ | CN | 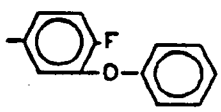 | |
| 18 | " | $CH_3$ | $CH_3$ | O | H | 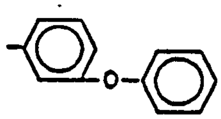 | $Kp._{0.1}$ = 220-225°C |
| 19 | " | $CH_3$ | $CH_3$ | O | H | 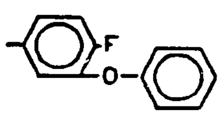 | $Kp._{0.2}$ = 225-230°C |
| 20 | " | $CH_3$ | $CH_3$ | O | H | 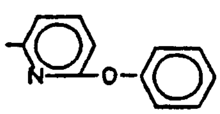 | $Kp._{0.05}$ = 210-220°C |
| 21 | " | $CH_3$ | $CH_3$ | O | H | 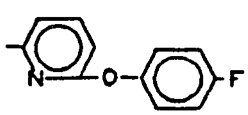 | |
| 22 | " | $CH_3$ | $CH_3$ | O | $CH_3$ | 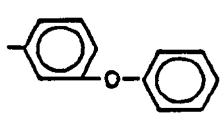 | $Kp._{0.1}$ = 230-235°C |

| Bsp. Nr. | $R^1$ | $R^2$ | $R^3$ | X | $R^4$ | $R^5$ | Physikalische Daten |
|---|---|---|---|---|---|---|---|
| 23 | 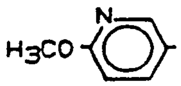 | $CH_3$ | $CH_3$ | $CH_2$ | H | 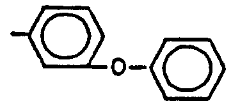 | $Kp._{0.1}$ = 205-210°C |
| 24 | " | $CH_3$ | $CH_3$ | $CH_2$ | H | 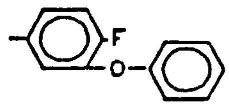 | $Kp._{0.05}$ = 200-205°C |
| 25 | " | $CH_3$ | $CH_3$ | $CH_2$ | H | 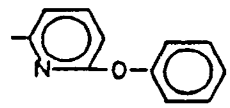 | |
| 26 | " | $CH_3$ | $CH_3$ | $CH_2$ | H | 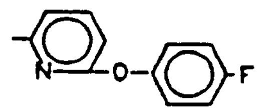 | |
| 27 | " | $CH_3$ | $CH_3$ | $CH_2$ | H | 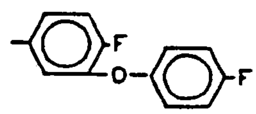 | |
| 28 | " | $CH_3$ | $CH_3$ | $CH_2$ | CN | 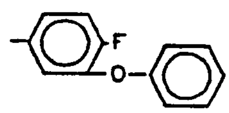 | |
| 29 | " | $CH_3$ | $CH_3$ | O | H | 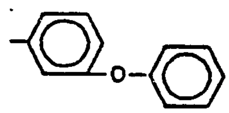 | |
| 30 | " | $CH_3$ | $CH_3$ | O | H | 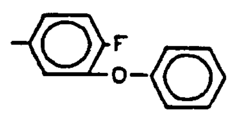 | $Kp._{0.1}$ = 210-220°C |
| 31 | " | $CH_3$ | $CH_3$ | O | H | 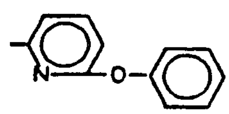 | |
| 32 | " | $CH_3$ | $CH_3$ | O | H | 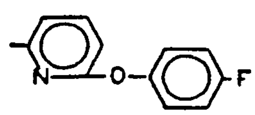 | |
| 33 | " | $CH_3$ | $CH_3$ | O | $CH_3$ | 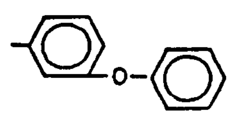 | |

| Bsp. Nr. | $R^1$ | $R^2$ | $R^3$ | X | $R^4$ | $R^5$ | Physikalische Daten |
|---|---|---|---|---|---|---|---|
| 34 | 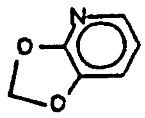 | $CH_3$ | $CH_3$ | $CH_2$ | H | 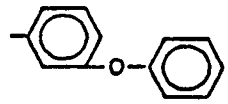 | |
| 35 | " | $CH_3$ | $CH_3$ | $CH_2$ | H | 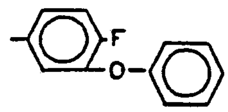 | |
| 36 | " | $CH_3$ | $CH_3$ | $CH_2$ | H | 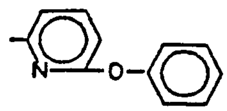 | |
| 37 | " | $CH_3$ | $CH_3$ | $CH_2$ | H | 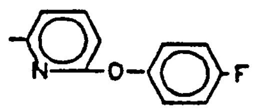 | |
| 38 | " | $CH_3$ | $CH_3$ | $CH_2$ | H | 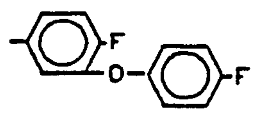 | |
| 39 | " | $CH_3$ | $CH_3$ | $CH_2$ | CN | 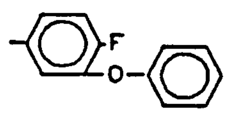 | |
| 40 | " | $CH_3$ | $CH_3$ | O | H | 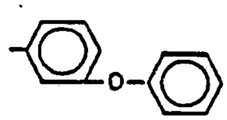 | |
| 41 | " | $CH_3$ | $CH_3$ | O | H | 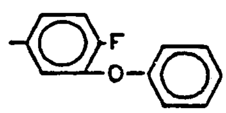 | |
| 42 | " | $CH_3$ | $CH_3$ | O | H | 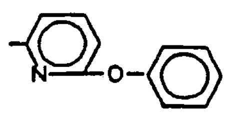 | |
| 43 | " | $CH_3$ | $CH_3$ | O | H | 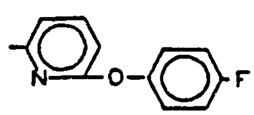 | |
| 44 | " | $CH_3$ | $CH_3$ | O | $CH_3$ | 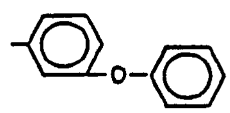 | |

| Bsp. Nr. | $R^1$ | $R^2$ | $R^3$ | X | $R^4$ | $R^5$ | Physikalische Daten |
|---|---|---|---|---|---|---|---|
| 45 | 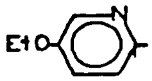 | $CH_3$ | $CH_3$ | $CH_2$ | H | 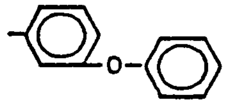 | $Kp._{0.2}$ = 235°C |
| 46 | " | $CH_3$ | $CH_3$ | $CH_2$ | H | 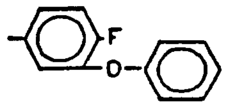 | $Kp._{0.15}$ = 225-230°C |
| 47 | " | $CH_3$ | $CH_3$ | $CH_2$ | H | 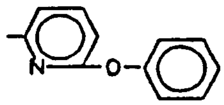 | |
| 48 | " | $CH_3$ | $CH_3$ | $CH_2$ | H | 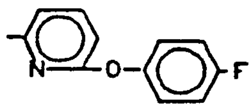 | |
| 49 | " | $CH_3$ | $CH_3$ | $CH_2$ | H | 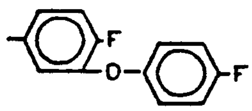 | |
| 50 | " | $CH_3$ | $CH_3$ | $CH_2$ | CN | 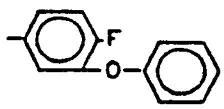 | blaßgelbes Öl |
| 51 | " | $CH_3$ | $CH_3$ | O | H | 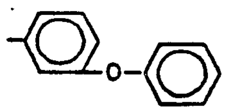 | $Kp._{0.2}$ = 230-240°C |
| 52 | " | $CH_3$ | $CH_3$ | O | H | 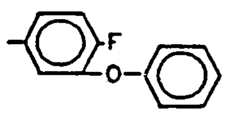 | $Kp._{0.15}$ = 230-235°C |
| 53 | " | $CH_3$ | $CH_3$ | O | H | 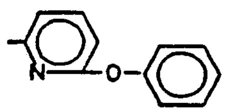 | $Kp._{0.2}$ = 235-240°C |
| 54 | " | $CH_3$ | $CH_3$ | O | H | 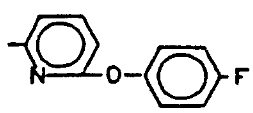 | |
| 55 | " | $CH_3$ | $CH_3$ | O | $CH_3$ | 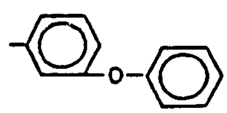 | |

| Bsp. Nr. | $R^1$ | $R^2$ | $R^3$ | X | $R^4$ | $R^5$ | Physikalische Daten |
|---|---|---|---|---|---|---|---|
| 56 | 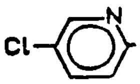 | $CH_3$ | $CH_3$ | $CH_2$ | H | 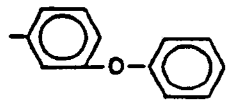 | $Kp._{0.02}$ = 190-200°C |
| 57 | " | $CH_3$ | $CH_3$ | $CH_2$ | H | 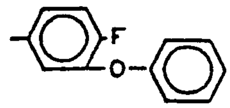 | $Kp._{0.1}$ = 205-215°C |
| 58 | " | $CH_3$ | $CH_3$ | $CH_2$ | H | 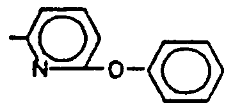 | |
| 59 | " | $CH_3$ | $CH_3$ | $CH_2$ | H | 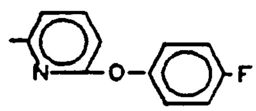 | |
| 60 | " | $CH_3$ | $CH_3$ | $CH_2$ | H | 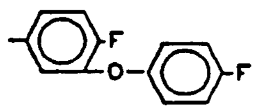 | |
| 61 | " | $CH_3$ | $CH_3$ | $CH_2$ | CN | 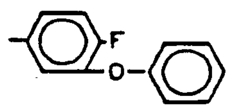 | |
| 62 | " | $CH_3$ | $CH_3$ | O | H | 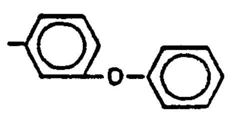 | $Kp._{0.2}$ = 215-220°C |
| 63 | " | $CH_3$ | $CH_3$ | O | H | 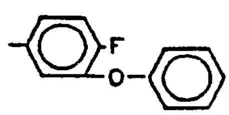 | $Kp._{0.2}$ = 210-215°C |
| 64 | " | $CH_3$ | $CH_3$ | O | H | 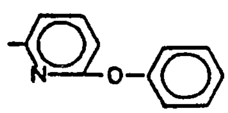 | |
| 65 | " | $CH_3$ | $CH_3$ | O | H | 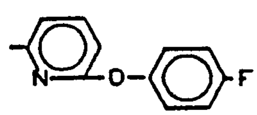 | |
| 66 | " | $CH_3$ | $CH_3$ | O | $CH_3$ | 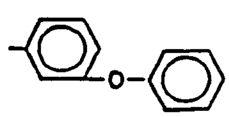 | |

| Bsp. Nr. | $R^1$ | $R^2$ | $R^3$ | X | $R^4$ | $R^5$ | Physikalische Daten |
|---|---|---|---|---|---|---|---|
| 67 | 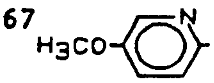 | $CH_3$ | $CH_3$ | $CH_2$ | H | 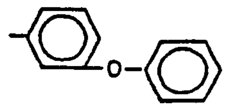 | |
| 68 | " | $CH_3$ | $CH_3$ | $CH_2$ | H | 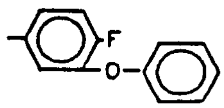 | $Kp._{0.1}$ = 210-220°C |
| 69 | " | $CH_3$ | $CH_3$ | $CH_2$ | H | 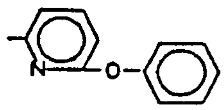 | |
| 70 | " | $CH_3$ | $CH_3$ | $CH_2$ | H | 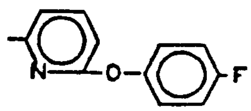 | |
| 71 | " | $CH_3$ | $CH_3$ | $CH_2$ | H | 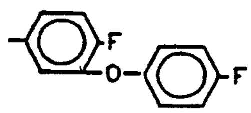 | |
| 72 | " | $CH_3$ | $CH_3$ | $CH_2$ | CN | 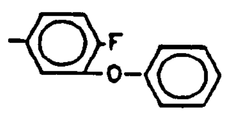 | |
| 73 | " | $CH_3$ | $CH_3$ | O | H | 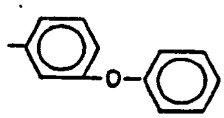 | |
| 74 | " | $CH_3$ | $CH_3$ | O | H | 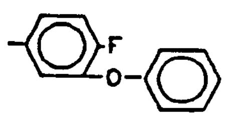 | $Kp._{0.05}$ = 210-215°C |
| 75 | " | $CH_3$ | $CH_3$ | O | H | 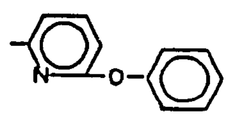 | |
| 76 | " | $CH_3$ | $CH_3$ | O | H | 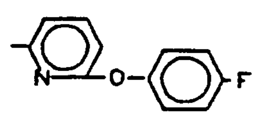 | |
| 77 | " | $CH_3$ | $CH_3$ | O | $CH_3$ | 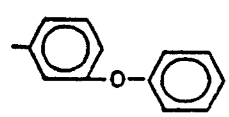 | |

| Bsp. Nr. | $R^1$ | $R^2$ | $R^3$ | X | $R^4$ | $R^5$ | Physikalische Daten |
|---|---|---|---|---|---|---|---|
| 78 | 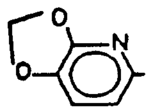 | $CH_3$ | $CH_3$ | $CH_2$ | H | 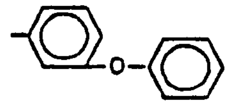 | |
| 79 | " | $CH_3$ | $CH_3$ | $CH_2$ | H | 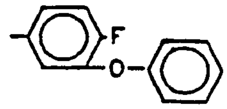 | |
| 80 | " | $CH_3$ | $CH_3$ | $CH_2$ | H | 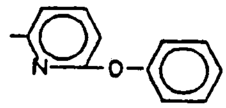 | |
| 81 | " | $CH_3$ | $CH_3$ | $CH_2$ | H | 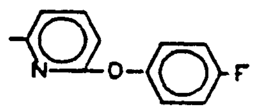 | |
| 82 | " | $CH_3$ | $CH_3$ | $CH_2$ | H | 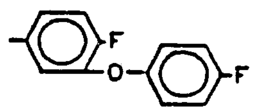 | |
| 83 | " | $CH_3$ | $CH_3$ | $CH_2$ | CN | 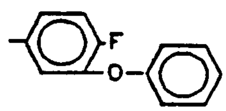 | |
| 84 | " | $CH_3$ | $CH_3$ | O | H | 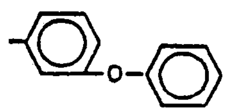 | |
| 85 | " | $CH_3$ | $CH_3$ | O | H | 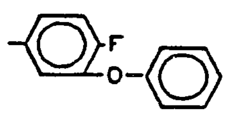 | |
| 86 | " | $CH_3$ | $CH_3$ | O | H | 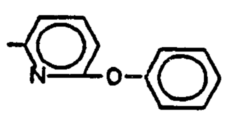 | |
| 87 | " | $CH_3$ | $CH_3$ | O | H | 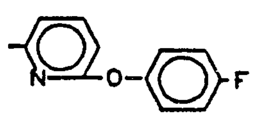 | |
| 88 | " | $CH_3$ | $CH_3$ | O | $CH_3$ | 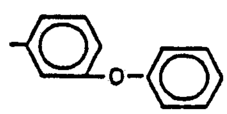 | |

| Bsp. Nr. | $R^1$ | $R^2$ | $R^3$ | X | $R^4$ | $R^5$ | Physikalische Daten |
|---|---|---|---|---|---|---|---|
| 89 | 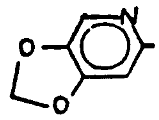 | $CH_3$ | $CH_3$ | $CH_2$ | H | 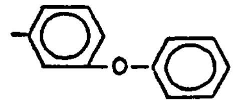 | |
| 90 | " | $CH_3$ | $CH_3$ | $CH_2$ | H | 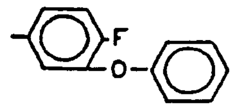 | |
| 91 | " | $CH_3$ | $CH_3$ | $CH_2$ | H | 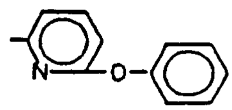 | |
| 92 | " | $CH_3$ | $CH_3$ | $CH_2$ | H | 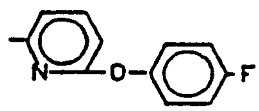 | |
| 93 | " | $CH_3$ | $CH_3$ | $CH_2$ | H | 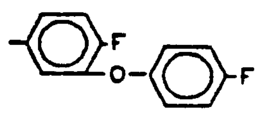 | |
| 94 | " | $CH_3$ | $CH_3$ | $CH_2$ | CN | 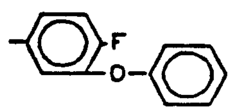 | |
| 95 | " | $CH_3$ | $CH_3$ | O | H | 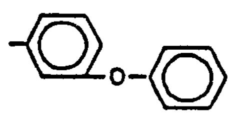 | |
| 96 | " | $CH_3$ | $CH_3$ | O | H | 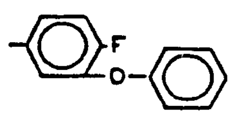 | |
| 97 | " | $CH_3$ | $CH_3$ | O | H | 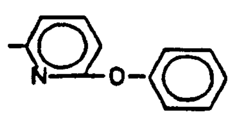 | |
| 98 | " | $CH_3$ | $CH_3$ | O | H | 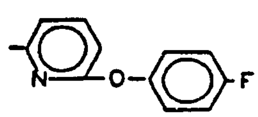 | |
| 99 | " | $CH_3$ | $CH_3$ | O | $CH_3$ | 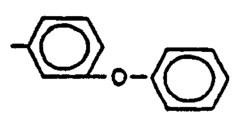 | |

| Bsp. Nr. | $R^1$ | $R^2$ | $R^3$ | X | $R^4$ | $R^5$ | Physikalische Daten |
|---|---|---|---|---|---|---|---|
| 100 | 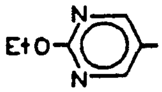 | $CH_3$ | $CH_3$ | $CH_2$ | H | 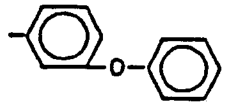 | $Kp._{0.3}$ = 250°C |
| 101 | " | $CH_3$ | $CH_3$ | $CH_2$ | H | 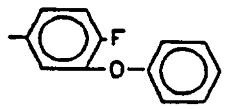 | $Kp._{0.15}$ = 235-240°C |
| 102 | " | $CH_3$ | $CH_3$ | $CH_2$ | H | 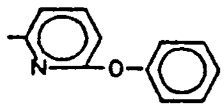 | blaßgelbes Öl |
| 103 | " | $CH_3$ | $CH_3$ | $CH_2$ | H | 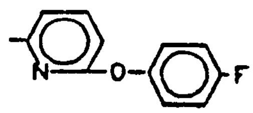 | |
| 104 | " | $CH_3$ | $CH_3$ | $CH_2$ | H | 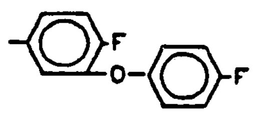 | |
| 105 | " | $CH_3$ | $CH_3$ | $CH_2$ | CN | 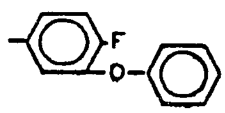 | |
| 106 | " | $CH_3$ | $CH_3$ | O | H | 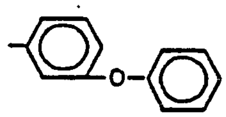 | $Kp._{0.05}$ = 220°C |
| 107 | " | $CH_3$ | $CH_3$ | O | H | 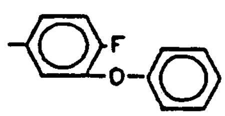 | $Kp._{0.05}$ = 215-220°C |
| 108 | " | $CH_3$ | $CH_3$ | O | H | 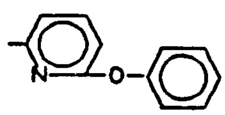 | |
| 109 | " | $CH_3$ | $CH_3$ | O | H | 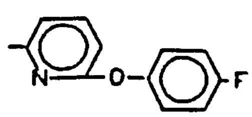 | |
| 110 | " | $CH_3$ | $CH_3$ | O | $CH_3$ | 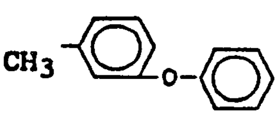 | |

| Bsp. Nr. | $R^1$ | $R^2$ | $R^3$ | X | $R^4$ | $R^5$ | Physikalische Daten |
|---|---|---|---|---|---|---|---|
| 111 | 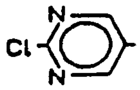 | $CH_3$ | $CH_3$ | $CH_2$ | H | 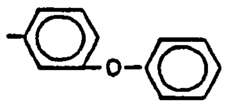 | $Kp._{0.1}$ = 235-240°C |
| 112 | " | $CH_3$ | $CH_3$ | $CH_2$ | H | 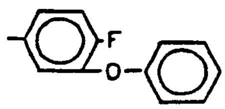 | $Kp._{0.05}$ = 230-235°C |
| 113 | " | $CH_3$ | $CH_3$ | $CH_2$ | H | 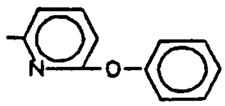 | |
| 114 | " | $CH_3$ | $CH_3$ | $CH_2$ | H | 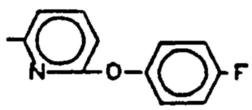 | |
| 115 | " | $CH_3$ | $CH_3$ | $CH_2$ | H | 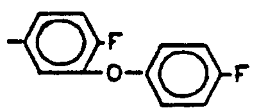 | |
| 116 | " | $CH_3$ | $CH_3$ | $CH_2$ | CN | 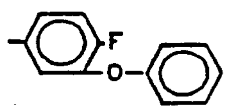 | |
| 117 | " | $CH_3$ | $CH_3$ | O | H | 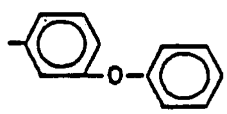 | $Kp._{0.05}$ = 235-240°C |
| 118 | " | $CH_3$ | $CH_3$ | O | H | 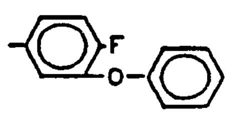 | $Kp._{0.1}$ = 240°C |
| 119 | " | $CH_3$ | $CH_3$ | O | H | 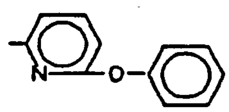 | |
| 120 | " | $CH_3$ | $CH_3$ | O | H | 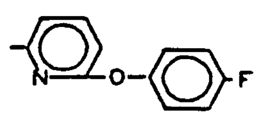 | |
| 121 | " | $CH_3$ | $CH_3$ | O | $CH_3$ | 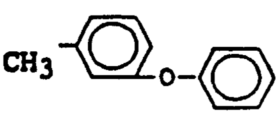 | |

| Bsp. Nr. | $R^1$ | $R^2$ | $R^3$ | X | $R^4$ | $R^5$ | Physikalische Daten |
|---|---|---|---|---|---|---|---|
| 122 | 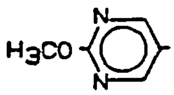 | $CH_3$ | $CH_3$ | $CH_2$ | H | 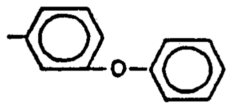 | $Kp._{0.05}$ = 235-245°C |
| 123 | " | $CH_3$ | $CH_3$ | $CH_2$ | H | 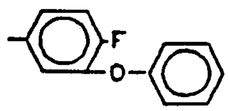 | $Kp._{0.1}$ = 240°C |
| 124 | " | $CH_3$ | $CH_3$ | $CH_2$ | H | 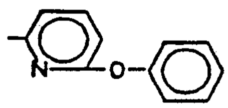 | |
| 125 | " | $CH_3$ | $CH_3$ | $CH_2$ | H | 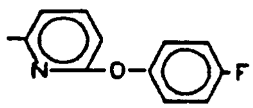 | |
| 126 | " | $CH_3$ | $CH_3$ | $CH_2$ | H | 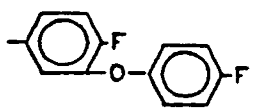 | |
| 127 | " | $CH_3$ | $CH_3$ | $CH_2$ | CN | 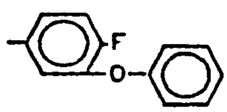 | |
| 128 | " | $CH_3$ | $CH_3$ | O | H | 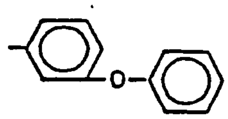 | blaßgelbes Öl |
| 129 | " | $CH_3$ | $CH_3$ | O | H | 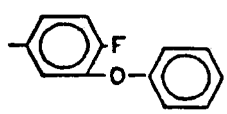 | $Kp._{0.02}$ = 230-235°C |
| 130 | " | $CH_3$ | $CH_3$ | O | H | 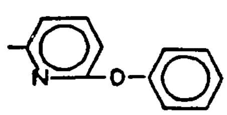 | |
| 131 | " | $CH_3$ | $CH_3$ | O | H | 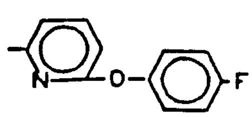 | |
| 132 | " | $CH_3$ | $CH_3$ | O | $CH_3$ | 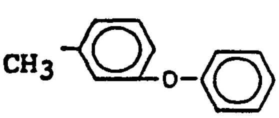 | |

| Bsp. Nr. | $R^1$ | $R^2$ | $R^3$ | X | $R^4$ | $R^5$ | Physikalische Daten |
|---|---|---|---|---|---|---|---|
| 133 | 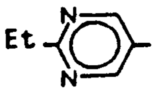 | $CH_3$ | $CH_3$ | $CH_2$ | H | 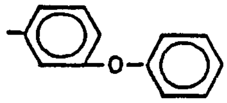 | |
| 134 | " | $CH_3$ | $CH_3$ | $CH_2$ | H | 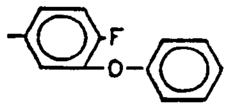 | $Kp._{0.05}$ = 235-240°C |
| 135 | " | $CH_3$ | $CH_3$ | $CH_2$ | H | 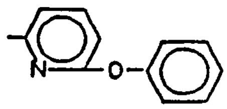 | |
| 136 | " | $CH_3$ | $CH_3$ | $CH_2$ | H | 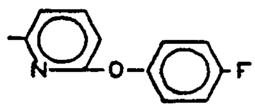 | |
| 137 | " | $CH_3$ | $CH_3$ | $CH_2$ | H | 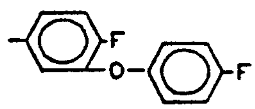 | |
| 138 | " | $CH_3$ | $CH_3$ | $CH_2$ | CN | 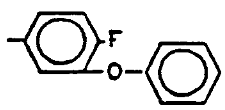 | |
| 139 | " | $CH_3$ | $CH_3$ | O | H | 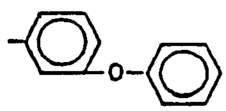 | |
| 140 | " | $CH_3$ | $CH_3$ | O | H | 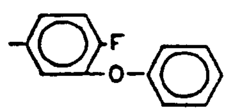 | $Kp._{0.02}$ = 240°C |
| 141 | " | $CH_3$ | $CH_3$ | O | H | 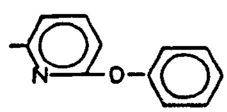 | |
| 142 | " | $CH_3$ | $CH_3$ | O | H | 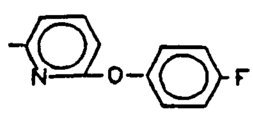 | |
| 143 | " | $CH_3$ | $CH_3$ | O | $CH_3$ | 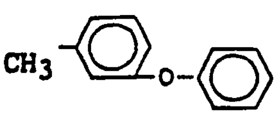 | |

| Bsp. Nr. | $R^1$ | $R^2$ | $R^3$ | X | $R^4$ | $R^5$ | Physikalische Daten |
|---|---|---|---|---|---|---|---|
| 144 | 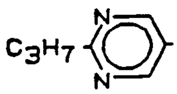 | $CH_3$ | $CH_3$ | $CH_2$ | H | 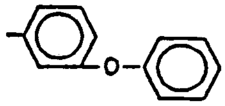 | $Kp._{0.02}$ = 235-245°C |
| 145 | " | $CH_3$ | $CH_3$ | $CH_2$ | H | 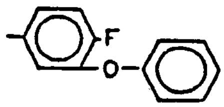 | |
| 146 | " | $CH_3$ | $CH_3$ | $CH_2$ | H | 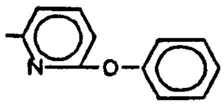 | |
| 147 | " | $CH_3$ | $CH_3$ | $CH_2$ | H | 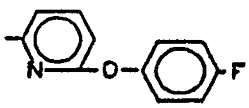 | |
| 148 | " | $CH_3$ | $CH_3$ | $CH_2$ | H | 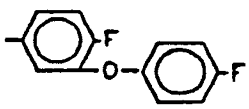 | |
| 149 | " | $CH_3$ | $CH_3$ | $CH_2$ | CN | 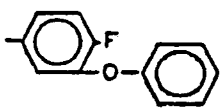 | |
| 150 | " | $CH_3$ | $CH_3$ | O | H | 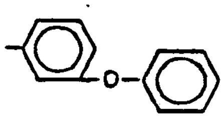 | |
| 151 | " | $CH_3$ | $CH_3$ | O | H | 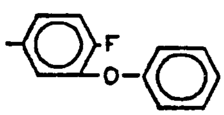 | $Kp._{0.04}$= 240-250°C |
| 152 | " | $CH_3$ | $CH_3$ | O | H | 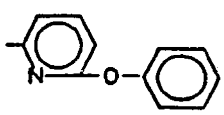 | |
| 153 | " | $CH_3$ | $CH_3$ | O | H | 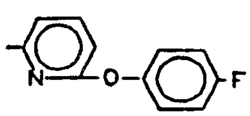 | |
| 154 | " | $CH_3$ | $CH_3$ | O | $CH_3$ | 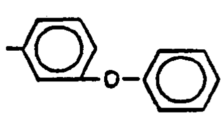 | |

| Bsp. Nr. | $R^1$ | $R^2$ | $R^3$ | X | $R^4$ | $R^5$ | Physikalische Daten |
|---|---|---|---|---|---|---|---|
| 155 | 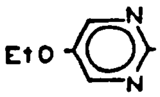 | $CH_3$ | $CH_3$ | $CH_2$ | H | 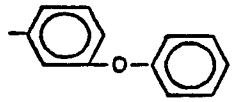 | |
| 156 | " | $CH_3$ | $CH_3$ | $CH_2$ | H | 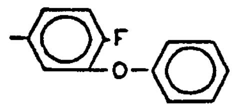 | $Kp._{0.05}$ = 210-220°C |
| 157 | " | $CH_3$ | $CH_3$ | $CH_2$ | H | 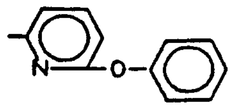 | |
| 158 | " | $CH_3$ | $CH_3$ | $CH_2$ | H | 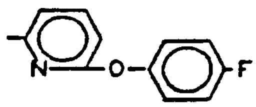 | |
| 159 | " | $CH_3$ | $CH_3$ | $CH_2$ | H | 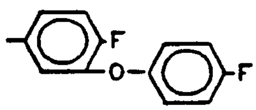 | |
| 160 | " | $CH_3$ | $CH_3$ | $CH_2$ | CN | 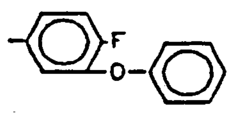 | |
| 161 | " | $CH_3$ | $CH_3$ | O | H | 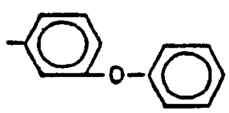 | $Kp._{0.02}$ = 220-225°C |
| 162 | " | $CH_3$ | $CH_3$ | O | H | 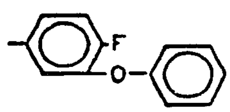 | $Kp._{0.1}$ = 230-235°C |
| 163 | " | $CH_3$ | $CH_3$ | O | H | 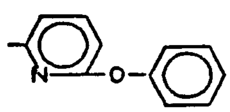 | |
| 164 | " | $CH_3$ | $CH_3$ | O | H | 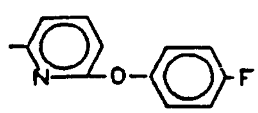 | |
| 165 | " | $CH_3$ | $CH_3$ | O | $CH_3$ | 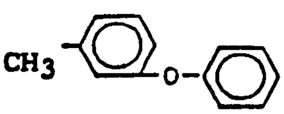 | |

| Bsp. Nr. | $R^1$ | $R^2$ | $R^3$ | X | $R^4$ | $R^5$ | Physikalische Daten |
|---|---|---|---|---|---|---|---|
| 166 | 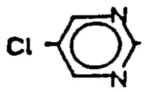 | $CH_3$ | $CH_3$ | $CH_2$ | H | 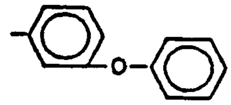 | |
| 167 | " | $CH_3$ | $CH_3$ | $CH_2$ | H | 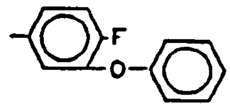 | |
| 168 | " | $CH_3$ | $CH_3$ | $CH_2$ | H | 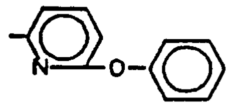 | |
| 169 | " | $CH_3$ | $CH_3$ | $CH_2$ | H | 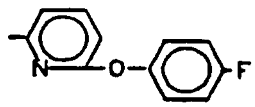 | |
| 170 | " | $CH_3$ | $CH_3$ | $CH_2$ | H | 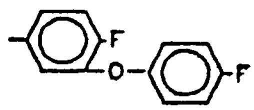 | |
| 171 | " | $CH_3$ | $CH_3$ | $CH_2$ | CN | 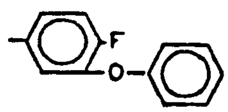 | |
| 172 | " | $CH_3$ | $CH_3$ | O | H | 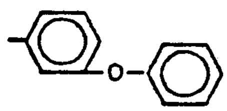 | |
| 173 | " | $CH_3$ | $CH_3$ | O | H | 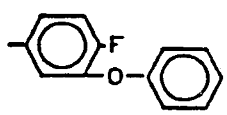 | |
| 174 | " | $CH_3$ | $CH_3$ | O | H | 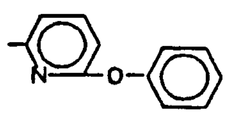 | |
| 175 | " | $CH_3$ | $CH_3$ | O | H | 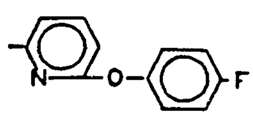 | |
| 176 | " | $CH_3$ | $CH_3$ | O | $CH_3$ | 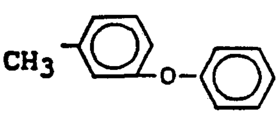 | |

| Bsp. Nr. | $R^1$ | $R^2$ | $R^3$ | X | $R^4$ | $R^5$ | Physikalische Daten |
|---|---|---|---|---|---|---|---|
| 177 | 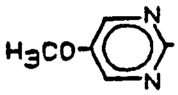 | $CH_3$ | $CH_3$ | $CH_2$ | H | 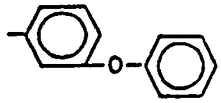 | |
| 178 | " | $CH_3$ | $CH_3$ | $CH_2$ | H | 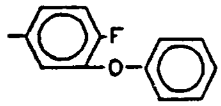 | |
| 179 | " | $CH_3$ | $CH_3$ | $CH_2$ | H | 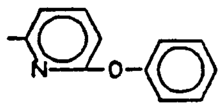 | |
| 180 | " | $CH_3$ | $CH_3$ | $CH_2$ | H | 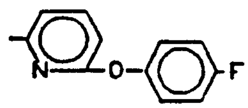 | |
| 181 | " | $CH_3$ | $CH_3$ | $CH_2$ | H | 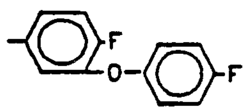 | |
| 182 | " | $CH_3$ | $CH_3$ | $CH_2$ | CN | 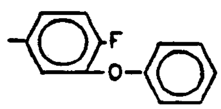 | |
| 183 | " | $CH_3$ | $CH_3$ | O | H | 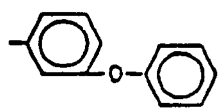 | |
| 184 | " | $CH_3$ | $CH_3$ | O | H | 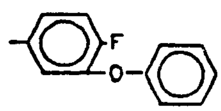 | |
| 185 | " | $CH_3$ | $CH_3$ | O | H | 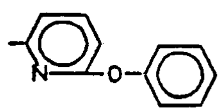 | |
| 186 | " | $CH_3$ | $CH_3$ | O | H | 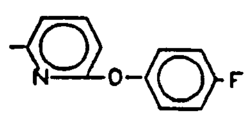 | |
| 187 | " | $CH_3$ | $CH_3$ | O | $CH_3$ | 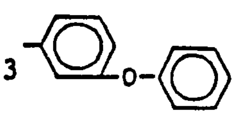 | |

| Bsp. Nr. | $R^1$ | $R^2$ | $R^3$ | X | $R^4$ | $R^5$ | Physikalische Daten |
|---|---|---|---|---|---|---|---|
| 188 | 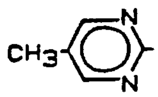 | $CH_3$ | $CH_3$ | $CH_2$ | H | 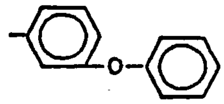 | |
| 189 | " | $CH_3$ | $CH_3$ | $CH_2$ | H | 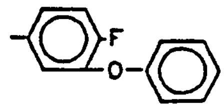 | |
| 190 | " | $CH_3$ | $CH_3$ | $CH_2$ | H | 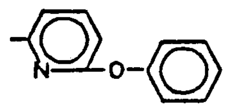 | |
| 191 | " | $CH_3$ | $CH_3$ | $CH_2$ | H | 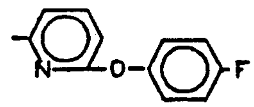 | |
| 192 | " | $CH_3$ | $CH_3$ | $CH_2$ | H | 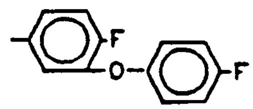 | |
| 193 | " | $CH_3$ | $CH_3$ | $CH_2$ | CN | 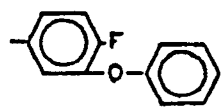 | |
| 194 | " | $CH_3$ | $CH_3$ | O | H | 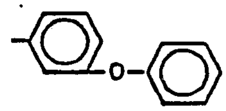 | |
| 195 | " | $CH_3$ | $CH_3$ | O | H | 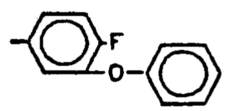 | |
| 196 | " | $CH_3$ | $CH_3$ | O | H | 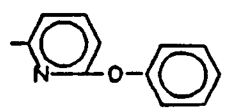 | |
| 197 | " | $CH_3$ | $CH_3$ | O | H | 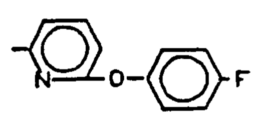 | |
| 198 | " | $CH_3$ | $CH_3$ | O | $CH_3$ | 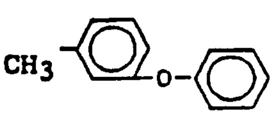 | |

| Bsp. Nr. | $R^1$ | $R^2$ | $R^3$ | X | $R^4$ | $R^5$ | Physikalische Daten |
|---|---|---|---|---|---|---|---|
| 199 | 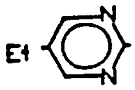 | $CH_3$ | $CH_3$ | $CH_2$ | H | 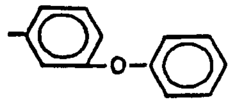 | |
| 200 | " | $CH_3$ | $CH_3$ | $CH_2$ | H | 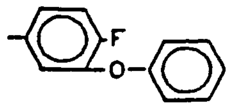 | |
| 201 | " | $CH_3$ | $CH_3$ | $CH_2$ | H | 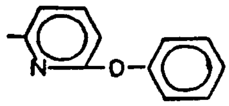 | |
| 202 | " | $CH_3$ | $CH_3$ | $CH_2$ | H | 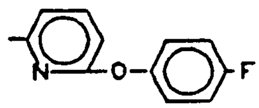 | |
| 203 | " | $CH_3$ | $CH_3$ | $CH_2$ | H | 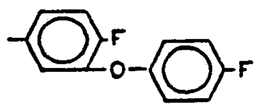 | |
| 204 | " | $CH_3$ | $CH_3$ | $CH_2$ | CN | 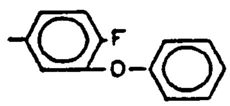 | |
| 205 | " | $CH_3$ | $CH_3$ | O | H | 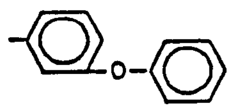 | |
| 206 | " | $CH_3$ | $CH_3$ | O | H | 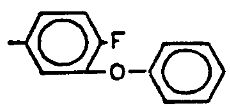 | |
| 207 | " | $CH_3$ | $CH_3$ | O | H | 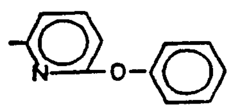 | |
| 208 | " | $CH_3$ | $CH_3$ | O | H | 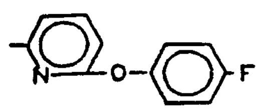 | |
| 209 | " | $CH_3$ | $CH_3$ | O | $CH_3$ | 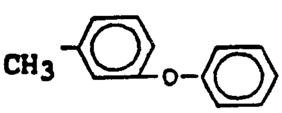 | |

| Bsp. Nr. | $R^1$ | $R^2$ | $R^3$ | X | $R^4$ | $R^5$ | Physikalische Daten |
|---|---|---|---|---|---|---|---|
| 210 | $C_3H_7$- 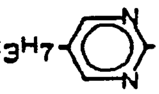 | $CH_3$ | $CH_3$ | $CH_2$ | H | 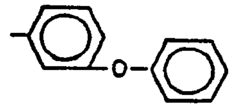 | |
| 211 | " | $CH_3$ | $CH_3$ | $CH_2$ | H | 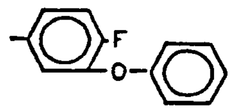 | |
| 212 | " | $CH_3$ | $CH_3$ | $CH_2$ | H | 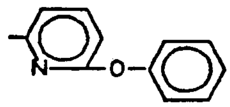 | |
| 213 | " | $CH_3$ | $CH_3$ | $CH_2$ | H | 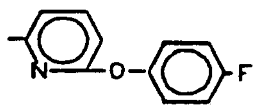 | |
| 214 | " | $CH_3$ | $CH_3$ | $CH_2$ | H | 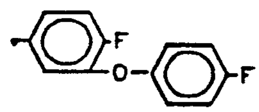 | |
| 215 | " | $CH_3$ | $CH_3$ | $CH_2$ | CN | 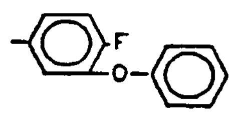 | |
| 216 | " | $CH_3$ | $CH_3$ | O | H | 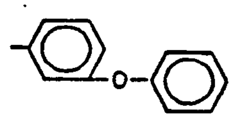 | |
| 217 | " | $CH_3$ | $CH_3$ | O | H | 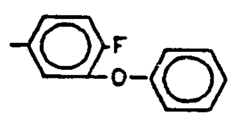 | |
| 218 | " | $CH_3$ | $CH_3$ | O | H | 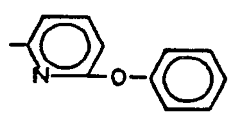 | |
| 219 | " | $CH_3$ | $CH_3$ | O | H | 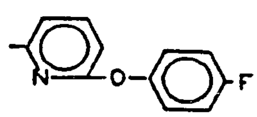 | |
| 220 | " | $CH_3$ | $CH_3$ | O | $CH_3$ | 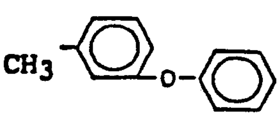 | |

| Bsp. Nr. | $R^1$ | $R^2$ | $R^3$ | X | $R^4$ | $R^5$ | Physikalische Daten |
|---|---|---|---|---|---|---|---|
| 221 | 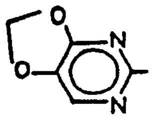 | $CH_3$ | $CH_3$ | $CH_2$ | H | 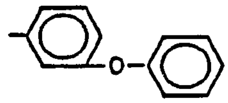 | |
| 222 | " | $CH_3$ | $CH_3$ | $CH_2$ | H | 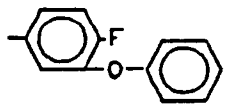 | |
| 223 | " | $CH_3$ | $CH_3$ | $CH_2$ | H | 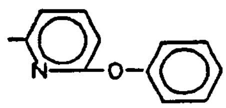 | |
| 224 | " | $CH_3$ | $CH_3$ | $CH_2$ | H | 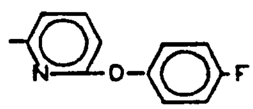 | |
| 225 | " | $CH_3$ | $CH_3$ | $CH_2$ | H | 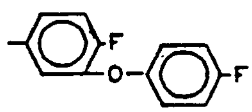 | |
| 226 | " | $CH_3$ | $CH_3$ | $CH_2$ | CN | 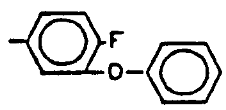 | |
| 227 | " | $CH_3$ | $CH_3$ | O | H | 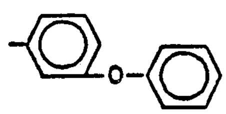 | |
| 228 | " | $CH_3$ | $CH_3$ | O | H | 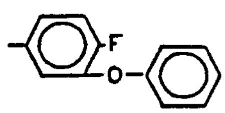 | |
| 229 | " | $CH_3$ | $CH_3$ | O | H | 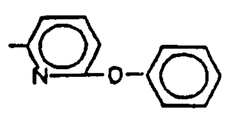 | |
| 230 | " | $CH_3$ | $CH_3$ | O | H | 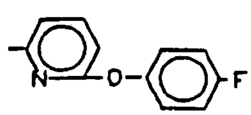 | |
| 231 | " | $CH_3$ | $CH_3$ | O | $CH_3$ | 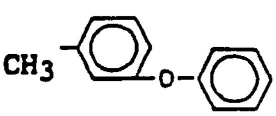 | |

| Bsp. Nr. | $R^1$ | $R^2$ | $R^3$ | X | $R^4$ | $R^5$ | Physikalische Daten |
|---|---|---|---|---|---|---|---|
| 232 | $F_2CHO$- 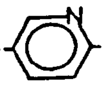 | $CH_3$ | $CH_3$ | $CH_2$ | H | 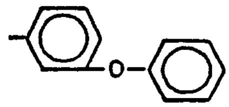 | |
| 233 | " | $CH_3$ | $CH_3$ | $CH_2$ | H | 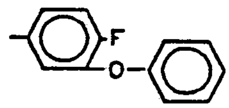 | |
| 234 | " | $CH_3$ | $CH_3$ | $CH_2$ | H | 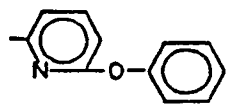 | |
| 235 | " | $CH_3$ | $CH_3$ | $CH_2$ | H | 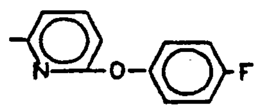 | |
| 236 | " | $CH_3$ | $CH_3$ | $CH_2$ | H | 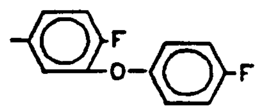 | |
| 237 | " | $CH_3$ | $CH_3$ | $CH_2$ | CN | 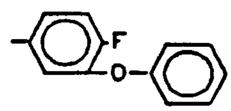 | |
| 238 | " | $CH_3$ | $CH_3$ | O | H | 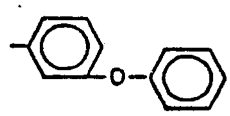 | |
| 239 | " | $CH_3$ | $CH_3$ | O | H | 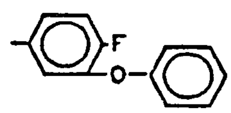 | |
| 240 | " | $CH_3$ | $CH_3$ | O | H | 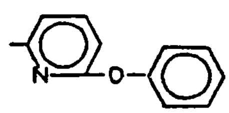 | |
| 241 | " | $CH_3$ | $CH_3$ | O | H | 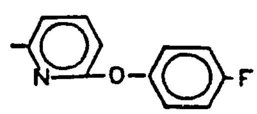 | |
| 242 | " | $CH_3$ | $CH_3$ | O | $CH_3$ | 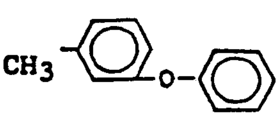 | |

| Bsp. Nr. | $R^1$ | $R^2$ | $R^3$ | X | $R^4$ | $R^5$ | Physikalische Daten |
|---|---|---|---|---|---|---|---|
| 243 | 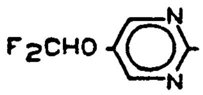 | $CH_3$ | $CH_3$ | $CH_2$ | H | 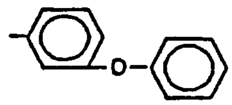 | |
| 244 | " | $CH_3$ | $CH_3$ | $CH_2$ | H | 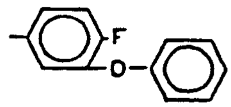 | |
| 245 | " | $CH_3$ | $CH_3$ | $CH_2$ | H | 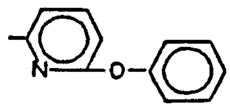 | |
| 246 | " | $CH_3$ | $CH_3$ | $CH_2$ | H | 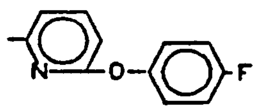 | |
| 247 | " | $CH_3$ | $CH_3$ | $CH_2$ | H | 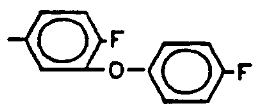 | |
| 248 | " | $CH_3$ | $CH_3$ | $CH_2$ | CN | 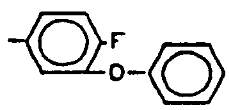 | |
| 249 | " | $CH_3$ | $CH_3$ | O | H | 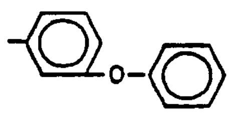 | |
| 250 | " | $CH_3$ | $CH_3$ | O | H | 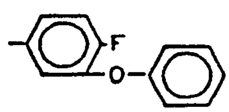 | |
| 251 | " | $CH_3$ | $CH_3$ | O | H | 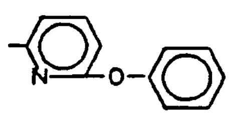 | |
| 252 | " | $CH_3$ | $CH_3$ | O | H | 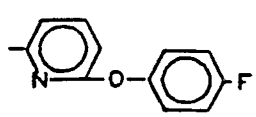 | |
| 253 | " | $CH_3$ | $CH_3$ | O | $CH_3$ | 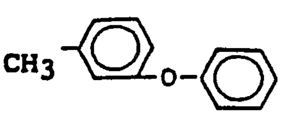 | |

| Bsp. Nr. | $R^1$ | $R^2$ | $R^3$ | X | $R^4$ | $R^5$ | Physikalische Daten |
|---|---|---|---|---|---|---|---|
| 254 | 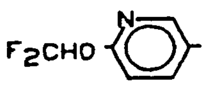 | $H_3$ | $CH_3$ | $CH_2$ | H | 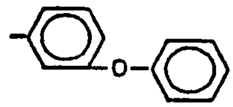 | |
| 255 | " | $CH_3$ | $CH_3$ | $CH_2$ | H | 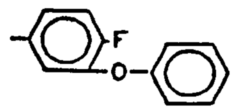 | |
| 256 | " | $CH_3$ | $CH_3$ | $CH_2$ | H | 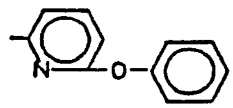 | |
| 257 | " | $CH_3$ | $CH_3$ | $CH_2$ | H | 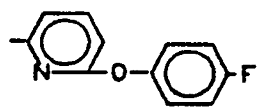 | |
| 258 | " | $CH_3$ | $CH_3$ | $CH_2$ | H | 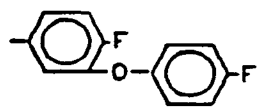 | |
| 259 | " | $CH_3$ | $CH_3$ | $CH_2$ | CN | 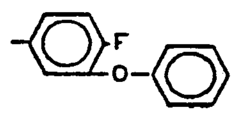 | |
| 260 | " | $CH_3$ | $CH_3$ | O | H | 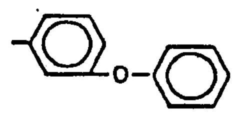 | |
| 261 | " | $CH_3$ | $CH_3$ | O | H | 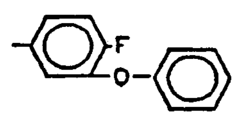 | |
| 262 | " | $CH_3$ | $CH_3$ | O | H | 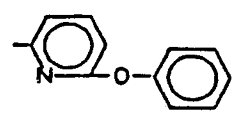 | |
| 263 | " | $CH_3$ | $CH_3$ | O | H | 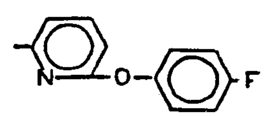 | |
| 264 | " | $CH_3$ | $CH_3$ | O | $CH_3$ | 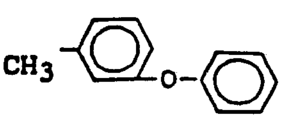 | |

| Bsp. Nr. | $R^1$ | $R^2$ | $R^3$ | X | $R^4$ | $R^5$ | Physikalische Daten |
|---|---|---|---|---|---|---|---|
| 265 | $F_2CHO$ 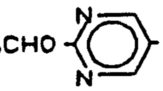 | $CH_3$ | $CH_3$ | $CH_2$ | H | 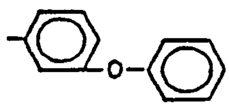 | |
| 266 | " | $CH_3$ | $CH_3$ | $CH_2$ | H | 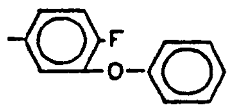 | |
| 267 | " | $CH_3$ | $CH_3$ | $CH_2$ | H | 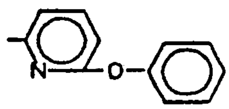 | |
| 268 | " | $CH_3$ | $CH_3$ | $CH_2$ | H | 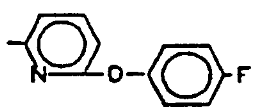 | |
| 269 | " | $CH_3$ | $CH_3$ | $CH_2$ | H | 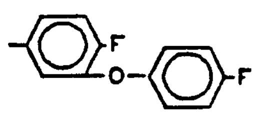 | |
| 270 | " | $CH_3$ | $CH_3$ | $CH_2$ | CN | 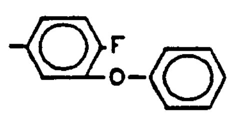 | |
| 271 | " | $CH_3$ | $CH_3$ | O | H | 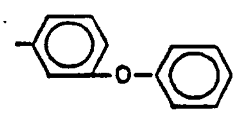 | |
| 272 | " | $CH_3$ | $CH_3$ | O | H | 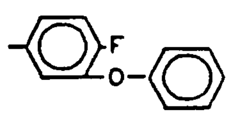 | |
| 273 | " | $CH_3$ | $CH_3$ | O | H | 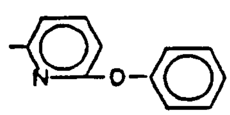 | |
| 274 | " | $CH_3$ | $CH_3$ | O | H | 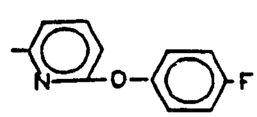 | |
| 275 | " | $CH_3$ | $CH_3$ | O | $CH_3$ | 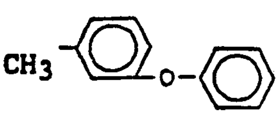 | |

## C. Biologische Beispiele

### Beispiel 1

Mit Kundebohnenblattlaus (Aphis craccivora) stark besetzte Ackerbohnen (Vicia faba) wurden mit wäßrigen Verdünnungen von Emulsionskonzentraten mit 1000 ppm Wirkstoffgehalt bis zum Stadium ders

beginnenden Abtropfens besprüht. Nach 3 Tagen betrug die Mortalität jeweils 100% bei den Präparaten mit den Wirkstoffen der Beispiele 1, 2, 3, 5, 8, 9, 10, 13, 19, 20, 30, 46, 52, 100, 101, 106, 107, 156, 161 und 162.

Beispiel 2

Mit Weißer Fliege (Trialeurodes vaporarierum) stark besetzte Bohnenpflanzen (Phaseolus vulgaris) wurden mit wäßrigen Verdunnungen von Emulsionskonzentraten (1000 ppm Wirkstoffgehalt) bis zum beginnenden Abtropfen gespritzt. Nach Aufstellen der Pflanzen im Gewächshaus erfolgte nach 14 Tagen die mikroskopische Kontrolle, mit dem Ergebnis jeweils 100 %iger Mortalität bei den Präparaten mit den Wirkstoffen der Beispiele 2, 8, 9, 13, 19, 46 und 101.

Beispiel 3

Versuchsdurchführung: analog Beispiele 2

Versuchstier: Tetranychus urticae (Bohnenspinnmilbe)
Versuchspflanze: Phaseolus vulgaris (Buschbohne)
Aufwandmenge: 1000 ppm Wirkstoff in der Spritzbrühw
Die nach 8 Tagen ermittelte Wirksamkeit erbrachte für die Verbindung 9 100% Mortalität

Beispiel 4

Mit Citrus-Schmierlaus (Pseudococcus citri) stark befallene Bohnenpflanzen (Phaseolus vulgaris) wurden mit wäßrigen Verdünnungen von Emulsionskonzentraten (jeweils 1000 ppm Wirkstoff in der Spritzbrühe) bis zum Stadium beginnenden Abtropfens besprüht.

Nach einer Standzeit von 7 Tagen im Gewächshaus bei 20—25°C erfolgte die Kontrolle.

100% Mortalität wurde für die Verbindungen gemäß Beispiel 1, 2, 3, 5, 8, 9, 100, 101, 106, 107 und 162 festgestellt.

Beispiel 5

Baumwollwanzen (Oncopeltus fasciatus) wurden mit wäßrigen Verdünnungen von Emulsionskonzentraten (jeweils 1000 ppm Wirkstoff in der Spritzbrühe) der Wirkstoffe aus Beispiel 1, 2, 3, 5, 8, 9, 10, 13, 19, 20, 30, 46, 52, 100, 101, 106 und 162 behandelt.

Anschließend wurden die Wanzen in mit luftdurchlässigen Deckeln versehenen Behältern bei Zimmertemperatur aufgestellt.

5 Tage nach der Behandlung wurde die Mortalität festgestellt und betrug in jedem Einzelfall 100%.

Beispiel 6

Die Bodeninnenseiten von mit künstlichem Nährmedium beschichteten Petrischalten wurden nach dem Erstarren des Futterbreis mit jeweils 3 ml einer 2000 ppm an Wirkstoff enthaltenden, wäßrigen Emulsion besprüht. Nach Abtrocknen des Spritzbelages und Einsetzen von 10 Larven des gemeinen Baumwollwurmes (Prodenia litura) wurden die Schalen 7 Tage bei 21°C aufbewahrt und dann der Wirkungsgrad der jeweiligen Verbindung (ausgedrückt in % Mortalität) bestimmt. Die Verbindungen 2, 8, 9, 10, 18, 19, 30, 52, 100, 101, 106 und 107 ergaben in diesem Test eine Wirksamkeit von jeweils 100%.

Beispiel 7

Blätter der Bohne (Phaseolus vulgaris) wurden mit einer wäßrigen Emulsion der Verbindung aus Beispiel 9 in einer Konzentration von 1000 ppm (bezogen auf Wirkstoff) behandelt und zu gleich behandelten Larven des Mexikanischen Bohnenkäfers (Epilachna varivestis) in Beobachtungskäfige gestellt. Eine Auswertung nach 48 Stunden ergab eine 100% Abtötung der Versuchstiere. Als gleichermaßen wirksam erwiesen sich die Verbindungen gemäß Beispiel 1, 2, 8 und 19.

Beispiel 8

Auf die Innenseite des Deckels und des Bodens einer Petrischale wurden mittels einer Pipette 1 ml aus Beispiel 9 als Wirkstoff in Aceton mit einer Konzentration von 1000 ppm gleichmäßig aufgetragen und bis zur vollständigen Verdunstung des Lösungsmittels die Schale offen belassen. Danach wurden je 10 Stubenfliegen (Musca domestica) in die Petrischalgen gesetzt, die Schalen mit dem Deckel verschlossen und nach 3 Stunden eine 100% Abtötung der Versuchstiere festgestellt. Ebenso wirksam erwiesen sich die Verbindungen gemäß Beispiel 1, 2, 100, 101, 106 und 107.

Beispiel 9

Mit Hilfe einer Pipette wurde auf die Innenseite des Deckels und des Bodens einer Petrischale jeweils 1 ml einer Wirkstofflösung in Aceton mit einer Konzentration von 2000 ppm gleichmäßig aufgetragen. Nach vollständigem Verdunsten des Lösungsmittels wurden je Petrischale 10 Larven (L4) der deutschen Schabe (Blatella germanica) eingesetzt und die Schalen mit den Deckeln verschlossen. Nach 72 h wurde die Wirkung (ausgedrückt in % Mortalität) festgestellt. Die Verbindungen 1, 2, 3, 5, 8, 9, 10, 13, 19, 20, 30, 46, 52, 100, 101, 106 und 107 ergaben in diesem Test eine Wirksamkeit von jeweils 100%.

**Patentansprüche für die Vertragsstaaten: BE CH DE FR GB GR IT LI NL**

1. Verbindungen der Formel I, ihre optischen Isomeren und deren Gemische,

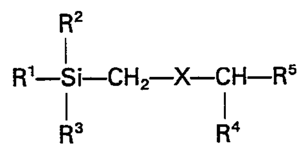

(I)

worin
X = $CH_2$ oder 0,
$R^1$ = einen Pyridyl- oder Pyrimidylrest der Formeln (A) oder (B) bedeutet,

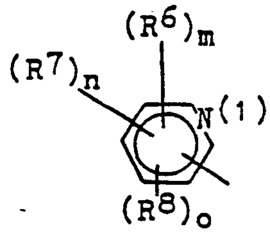

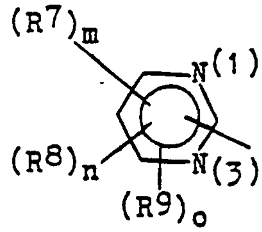

(A) (B)

worin
m, n, o eine Zahl von 0 bis 2, mit der Maßgabe daß $0 \leq m + n + o \leq 3$ ist,
$R^6$, $R^7$, $R^8$, $R^9$ unabhängig voneinander Halogen, $(C_1—C_4)$Alkyl, $(C_1—C_3)$Alkoxy, $(C_1—C_3)$Halogenalkyl oder $(C_1—C_3)$Halogenalkoxy oder zwei der Reste $R^6$, $R^7$, $R^8$, $R^9$, wenn sie orthoständig zueinanderstehen einen Methylendioxy-, Ethylendioxy- oder $(C_3—C_5)$Alkylenrest,
$R^2$, $R^3$ = $(C_1—C_3)$Alkyl, $(C_2—C_8)$Alkenyl oder $R^2$ und $R^3$ eine Alkylenkette, die — zusammen mit dem Siliciumatom — einen unsubstituierten oder $(C_1—C_4)$alkylsubstituierten Heterocyclus mit vier bis sechs Ringgliedern ergibt,
$R^4$ = —H, —CN, —$CCl_3$, —C≡CH, $(C_1—C_4)$Alkyl, F,

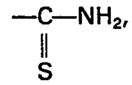

$R^5$ = einen substituierten Phenylrest der Formel (C) bedeuten,

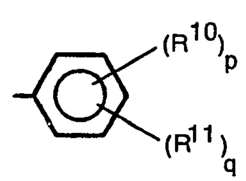

(C)

worin $R^{10}$ und $R^{11}$ — unabhängig voneinander — Halogen, $(C_1—C_4)$Alkyl, $(C_1—C_4)$Alkoxy, $(C_1—C_4)$Halogenalkyl, Phenyl, N-Pyrrolyl oder eine Gruppe der allgemeinen Formel (D) bedeuten kann,

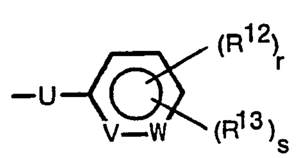

(D)

worin $R^{12}$ und $R^{13}$ = unabhängig voneinander H, Halogen, $(C_1—C_4)$Alkyl, $(C_1—C_4)$Alkoxy und $(C_1—C_4)$Halogenalkyl; U = —$CH_2$—, >C=0, —O— oder —S—, bevorzugt —O—; V, W = CH oder N, wobei beide gleichzeitig CH aber nicht gleichzeitig N bedeuten können, und wobei in Formeln (C) und (D)

p, q = eine ganz Zahl von 0 bis 5 mit der Bedingung, daß die Summe p + q eine Zahl von 1 bis 5 bedeuten muß,

r, s = 0, 1 oder 2, mit der Bedingung, daß die Summe von r + s = 0, 1, oder 2 sein muß, und der

Bedingung, daß, falls $R^{10}$ oder $R^{11}$ der Gruppierung (D) entspricht, p, q = 0 oder 1 und p + q = 1 oder 2 bedeuten muß oder $R^5$ eine Pyridyl-Gruppe der Formel E

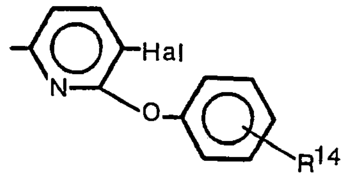

(E),

worin $R^{14}$ = Halogen außer J, $(C_1—C_4)$Alkyl, $(C_1—C_4)$Alkoxy oder $(C_1—C_4)$Halogenalkyl und Hal = Halogen, insbesondere Fluor, oder H bedeutet.

2. Verbindungen der Formel I von Anspruch 1, worin $R^2$, $R^3$ = $(C_1—C_3)$Alkyl oder $R^2$ und $R^3$ zusammen eine $(C_3—C_5)$Alkylenkette und $R^4$ = H, —CN oder $(C_1—C_4)$Alkyl bedeuten.

3. Verbindungen der Formel I, von Ansprüchen 1 oder 2, worin $R^1$ einen ein- oder zweifach substituierten Pyridyl- oder Pyrimidyl-Rest bedeutet, wobei der Pyridylrest in Position 2 oder 3 und der Pyrimidyl-Rest in Position 2 oder 5 an das Si-Atom gebunden ist, und die Substituenten $R^6$, $R^7$, $R^8$ oder $R^9$ para- oder metaständig zur Si-Verknüpfungsstelle orientiert sind; $R^2$, $R^3$ = $CH_3$, $R^4$ = H und $R^5$ einen Rest der Formel

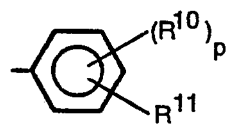

wobei $(R^{10})_p$ = H oder 4-Fluor und $R^{11}$ den Rest

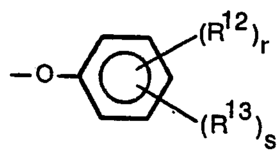

mit $R^{12}$, $R^{13}$ = Wasserstoff oder Halogen, insbesondere Fluor und r + s = 0, 1 oder 2, bedeuten.

4. Verbindungen der Formel I von Ansprüchen 1 oder 2, wobei $R^5$ eine Pyridyl-Gruppe der Formel E

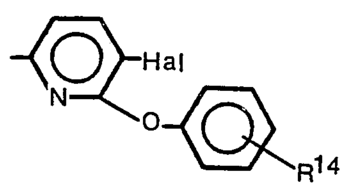

(E),

worin $R^{14}$ = Halogen außer J, $(C_1—C_4)$Alkyl, $(C_1—C_4)$Alkoxy oder $(C_1—C_4)$Halogenalkyl und Hal = Halogen, insbesondere Fluor, oder H bedeutet.

5. Verfahren zur Herstellung der Verbindungen der Formel I von Ansprüchen 1 bis 4, dadurch gekennzeichnet, daß man

a) für Verbindungen mit X = $CH_2$ ein Silan der allgemeinen Formel (II),

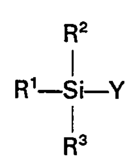

worin Y eine nucleofuge Abgangsgruppe wie beispielsweise Halogen oder Sulfonat bedeutet, mit einem metallorganischen Reagenz der allgemeinen Formel (III),

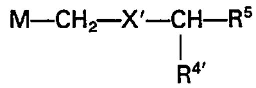

(III)

worin M ein Alkalimetall- oder Erdalkalimetall-Aequivalent, X′ eine Methylengruppe und $R^{4'}$ H oder $(C_1—C_4)$Alkyl bedeutet, oder

b) ein Silan der allgemeinen Formel (IV) oder (V)

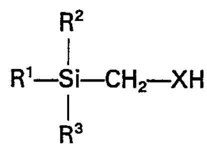

(IV)

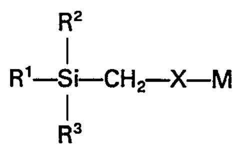

(V)

mit einem Alkylierungsmittel der allgemeinen Formel VI,

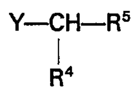

(VI)

gegebenenfalls in Gegenwart einer Base, oder

c) ein Silan der allgemeinen Formel (VII)

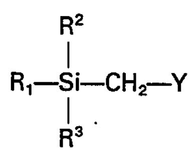

(VII)

mit einer XH-aciden Verbindung des Typs (VIII)

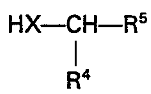

(VIII)

in Gegenwart einer Base oder mit einer metallorganischen Verbindung des Typs IX

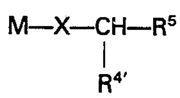

oder

d) für Verbindungen mit X = $CH_2$ ein Silan der allgemeinen Formel (X)

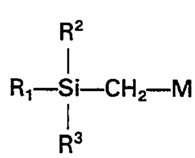

(X)

mit einer Verbindung des Typs (XI)

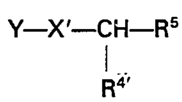

(XI)

oder

e) für Verbindungen mit X = $CH_2$ ein Silan der allgemeinen Formel (XII)

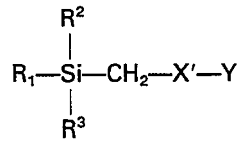

(XII)

mit einer metallorganischen Verbindung der allgemeinen Formel (XIII)

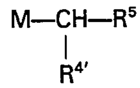

(XIII)

oder

f) ein Silan der allgemeinen Formel (XIV)

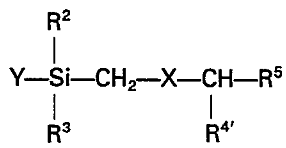

(XIV)

mit einem metallorganischen Reagenz des Typs (XV)

$R^1$—M (XV)

oder

g) ein Silan der allgemeinen Formel (XVI)

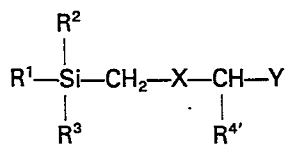

(XVI)

mit einem metallorganischen Reagenz des Typs (XVII)

M—$R^5$ (XVII),

gegebenenfalls in Gegenwart von Übergangsmetallkatalysatoren der I. oder VIII. Nebengruppe,
oder

h) für Verbindungen mit X = $CH_2$ ein Silan der allgemeinen Formel (XXX)

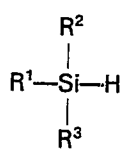

(XXX)

mit einem Olefin der allgemeinen Formel (XXXI)

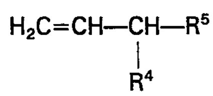

in Gegenwart einer Komplexverbindung eines Elementes der VIII. Nebengruppe des Periodensystems als Katalysator oder

i) für Verbindungen mit X = 0 ein Silan der allgemeinen Formel (XXXII)

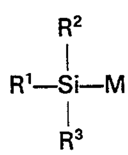

(XXXII)

mit einem Alkylierungsmittel der allgemeinen Formel (XXXIII)

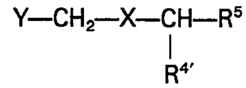

(XXXIII)

umsetzt.

6. Schädlingsbekämpfungsmittel, dadurch gekennzeichnet, daß sie eine Verbindung der Formel I von Ansprüchen 1, 2, 3 oder 4 enthalten.

7. Insektizide Mittel, dadurch gekennzeichnet, daß sie eine Verbindung der Formel I von Ansprüchen 1, 2, 3 oder 4 enthalten.

8. Akarizide Mittel, dadurch gekennzeichnet, daß sie eine Verbindung der Formel I von Ansprüchen 1, 2, 3 oder 4 enthalten.

9. Nematozide Mittel, dadurch gekennzeichnet, daß sie eine Verbindung der Formel I von Ansprüchen 1, 2, 3 oder 4 enthalten.

10. Verwendung von Verbindungen der Formel I von Ansprüchen 1, 2, 3 oder 4 als Schädlingsbekämpfungsmittel.

11. Verfahren zur Bekämpfung von Schadinsekten, Akariden oder Nematoden, dadurch gekennzeichnet, daß man auf diese, die von Ihnen befallenen Flächen, Pflanzen oder Substrate eine wirksame Menge einer Verbindung der Formel I von Ansprüchen 1, 2, 3 oder 4 appliziert.

**Patentansprüche für die Vertragsstaaten: ES AT**

1. Verfahren zur Herstellung von Verbindungen der Formel I

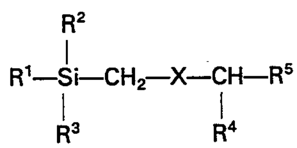

(I)

worin

$X = CH_2$ oder 0,

$R^1$ = einen Pyridyl- oder Pyrimidylrest der Formeln (A) oder (B) bedeutet,

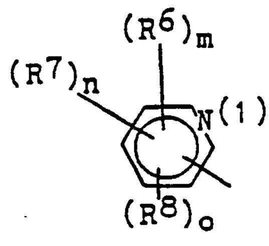

(A)

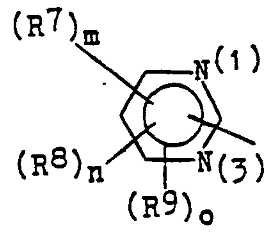

(B)

worin

m, n, o eine Zahl von 0 bis 2, mit der Maßgabe daß $0 \leq m + n + o \leq 3$ ist,

$R^6$, $R^7$, $R^8$, $R^9$ unabhängig voneinander Halogen, $(C_1-C_4)$Alkyl, $(C_1-C_3)$Alkoxy, $(C_1-C_3)$Halogenalkyl oder $(C_1-C_3)$Halogenalkoxy oder zwei der Reste $R^6$, $R^7$, $R^8$, $R^9$, wenn sie orthoständig zueinanderstehen einen Methylendioxy-, Ethylendioxy- oder $(C_3-C_5)$Alkylenrest,

$R^2$, $R^3$ = $(C_1-C_3)$Alkyl, $(C_2-C_8)$Alkenyl oder $R^2$ und $R^3$ eine Alkylenkette, die — zusammen mit dem Siliciumatom — einen unsubstituierten oder $(C_1-C_4)$alkylsubstituierten Heterocyclus mit vier bis sechs Ringgliedern ergibt,

$R^4$ = —H, —CN, $-CCl_3$, —C≡CH, $(C_1-C_4)$Alkyl, F,

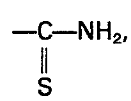

$R^5$ = einen substituierten Phenylrest der Formel (C) bedeuten,

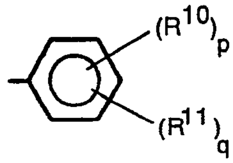 (C)

worin $R^{10}$ und $R^{11}$ — unabhängig voneinander — Halogen, $(C_1—C_4)$Alkyl, $(C_1—C_4)$Alkoxy, $(C_1—C_4)$Halogenalkyl, Phenyl, N-Pyrrolyl oder eine Gruppe der allgemeinen Formel (D) bedeuten kann,

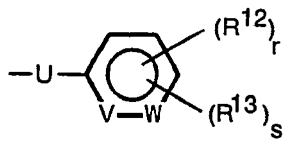 (D)

worin $R^{12}$ und $R^{13}$ = unabhängig voneinander H, Halogen, $(C_1—C_4)$Alkyl, $(C_1—C_4)$Alkoxy und $(C_1—C_4)$Halogenalkyl; U = $—CH_2—$, >C=0, —O— oder —S—, bevorzugt —O—; V, W = CH oder N, wobei beide gleichzeitig CH aber nicht gleichzeitig N bedeuten können, und wobei in Formeln (C) und (D)

p, q = eine ganz Zahl von 0 bis 5 mit der Bedingung, daß die Summe p + q eine Zahl von 1 bis 5 bedeuten muß,

r, s = 0, 1 oder 2, mit der Bedingung, daß die Summe von r + s = 0, 1, oder 2 sein muß, und der Bedingung, daß, falls $R^{10}$ oder $R^{11}$ der Gruppierung (D) entspricht,

p, q = 0 oder 1 und p + q = 1 oder 2 bedeuten muß oder $R^5$ eine Pyridyl-Gruppe der Formel E

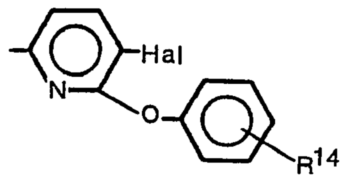 (E),

worin $R^{14}$ = Halogen außer J, $(C_1—C_4)$Alkyl, $(C_1—C_4)$Alkoxy oder $(C_1—C_4)$Halogenalkyl und Hal = Halogen, insbesondere Fluor, oder H bedeutet, dadurch gekennzeichnet, daß man

a) für Verbindungen mit X = $CH_2$ ein Silan der allgemeinen Formel (II),

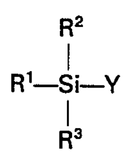

worin Y eine nucleofuge Abgangsgruppe wie beispielsweise Halogen oder Sulfonat bedeutet, mit einem metallorganischen Reagenz der allgemeinen Formel (III),

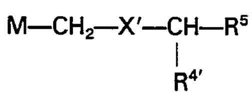 (III)

worin M ein Alkalimetall- oder Erdalkalimetall-Aequivalent, X' eine Methylengruppe und $R^{4'}$ H oder $(C_1—C_4)$Alkyl bedeutet, oder

b) ein Silan der allgemeinen Formel (IV) oder (V)

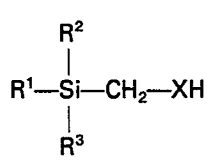 (IV)

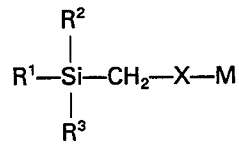 (V)

mit einem Alkylierungsmittel der allgemeinen Formel VI,

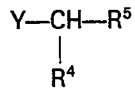 (VI)

gegebenenfalls in Gegenwart einer Base, oder

c) ein Silan der allgemeinen Formel (VII)

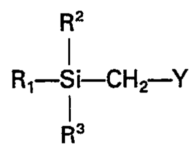 (VII)

mit einer XH-aciden Verbindung des Typs (VIII)

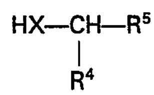 (VIII)

in Gegenwart einer Base oder mit einer metallorganischen Verbindung des Typs IX

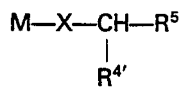 (IX)

oder

d) für Verbindungen mit X = $CH_2$ ein Silan der allgemeinen Formel (X)

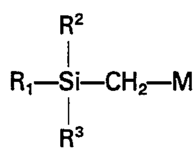 (X)

mit einer Verbindung des Typs (XI)

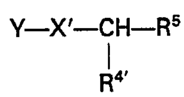 (XI)

oder

e) für Verbindungen mit X = $CH_2$ ein Silan der allgemeinen Formel (XII)

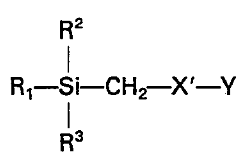 (XII)

mit einer metallorganischen Verbindung der allgemeinen Formel (XIII)

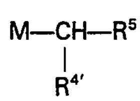 (XIII)

oder

f) ein Silan der allgemeinen Formel (XIV)

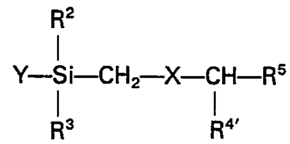

(XIV)

mit einem metallorganischen Reagenz des Typs (XV)

$$R^1—M \qquad (XV)$$

oder

g) ein Silan der allgemeinen Formel (XVI)

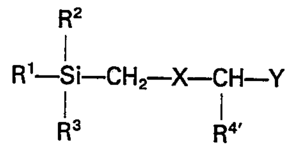

(XVI)

mit einem metallorganischen Reagenz des Typs (XVII)

$$M—R^5 \qquad (XVII),$$

gegebenenfalls in Gegenwart von Übergangsmetallkatalysatoren der I. oder VIII. Nebengruppe, oder

h) für Verbindungen mit X = $CH_2$ ein Silan der allgemeinen Formel (XXX)

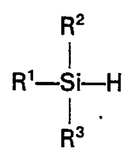

(XXX)

mit einem Olefin der allgemeinen Formel (XXXI)

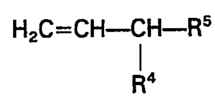

in Gegenwart einer Komplexverbindung eines Elementes der VIII. Nebengruppe des Periodensystems als Katalysator oder

i) für Verbindungen mit X = 0 ein Silan der allgemeinen Formel (XXXII)

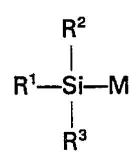

(XXXII)

mit einem Alkylierungsmittel der allgemeinen Formel (XXXIII)

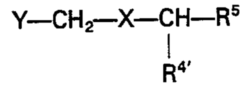

(XXXIII)

umsetzt.

2. Verfahren nach Anspruch 1 für Verbindungen oder Formel I von Anspruch 1, worin $R^1$ einen ein- oder zweifach substituierten Pyridyl- oder Pyrimidyl-Rest bedeutet, wobei der Pyridylrest in Position 2 oder 3 und der Pyrimidyl-Rest in Position 2 oder 5 an das Si-Atom gebunden ist, und die Substituenten $R^6$, $R^7$, $R^8$ oder $R^9$ para- oder metaständig zur Si-Verknüpfungsstelle orientiert sind; $R^2$, $R^3=CH_3$, $R^4=H$ und $R^5$ einen Rest der Formel

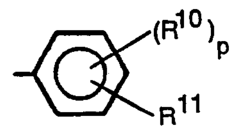

wobei $(R^{10})_p$ = H oder 4-Fluor und $R^{11}$ den Rest

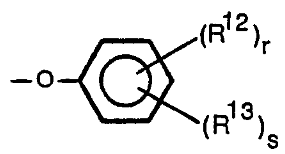

mit $R^{12}$, $R^{13}$ = H, Halogen, insbesondere Fluor und r + s = 0, 1 oder 2, bedeuten.

3. Verfahren nach Anspruch 1 für Verbindungen der Formel I von Anspruch 1, wobei $R^5$ eine Pyridyl-Gruppe der Formel E

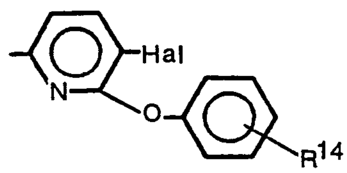

(E),

worin $R^{14}$ = Halogen außer J, $(C_1\text{—}C_4)$Alkyl, $(C_1\text{—}C_4)$Alkoxy oder $(C_1\text{—}C_4)$Halogenalkyl und Hal = Halogen, insbesondere Fluor, oder H bedeutet.

4. Schädlingsbekämpfungsmittel, dadurch gekennzeichnet, daß sie eine Verbindung der Formel I von Ansprüchen 1, 2 oder 3 enthalten.

5. Insektizide Mittel, dadurch gekennzeichnet, daß sie eine Verbindung der Formel I von Ansprüchen 1, 2 oder 3 enthalten.

6. Akarizide Mittel, dadurch gekennzeichnet, daß sie eine Verbindung der Formel I von Ansprüchen 1, 2 oder 3 enthalten.

7. Nematozide Mittel, dadurch gekennzeichnet, daß sie eine Verbindung der Formel I von Ansprüchen 1, 2 oder 3 enthalten.

8. Verwendung von Verbindung der Formel I von Ansprüchen 1, 2 oder 3 als Schädlingsbekämpfungsmittel.

9. Verfahren zur Bekämpfung von Schadinsekten, Akariden oder Nematoden, dadurch gekennzeichnet, daß man auf diese, die von Ihnen befallenen Flächen, Pflanzen oder Substrate eine wirksame Menge einer Verbindung der Formel I von Ansprüchen 1, 2 oder 3 appliziert.

**Revendications pour les Etats contractants: BE CH DE FR GB GR IT LI NL**

1. Composés de formule I, leurs isomères optiques et leurs mélanges

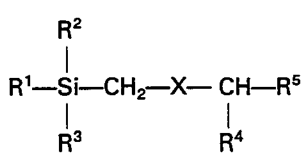

(I),

formule dans laquelle

X représente $CH_2$ ou O,

$R^1$ représente un reste pyridyle ou pyrimidyle répondant aux formules (A) ou (B)

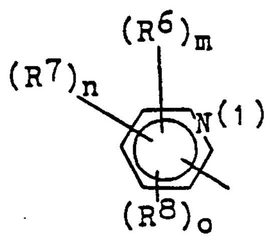

(A)

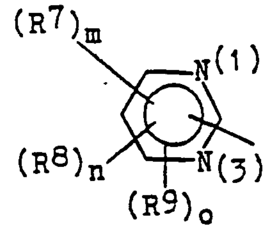

(B)

dans lesquelles

les symboles m, n et o représentent chacun un nombre valant 0 à 2, à la condition que $0 \leq m + n + o \leq 3$,

$R^6$, $R^7$, $R^8$ et $R^9$ représentent chacun, indépendamment l'un de l'autre, un atome d'halogène, un reste alkyle en $C_1$ à $C_4$, alcoxy en $C_1$ à $C_3$, halogéno-alkyle en $C_1$ à $C_3$ ou halogéno-alcoxy en $C_1$ à $C_3$, ou bien deux des restes $R^6$, $R^7$, $R^8$ et $R^9$, quand ils sont en ortho l'un par rapport à l'autre, forment un reste méthylènedioxy, éthylènedioxy ou alkylène en $C_3$ à $C_5$,

$R^2$ et $R^3$ représentent chacun un reste alkyle en $C_1$ à $C_3$, alcényle en $C_2$ à $C_8$ ou bien $R_2$ et $R_3$ forment une chaîne alkylène qui, avec l'atome de silicium, donne un hétérocycle comportant 4 à 6 chaînons (tétragonal à hexagonal), non substitué ou substitué par un ou des groupes alkyles en $C_1$ à $C_4$,

$R^4$ représente —H, —CN, —$CCl_3$, —C≡CH, un reste alkyle en $C_1$ à $C_4$, F,

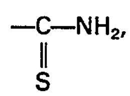

et

$R^5$ représente un reste phényle substitué de formule (C)

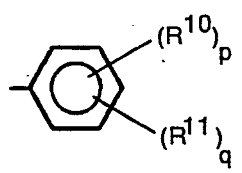

(C)

dans laquelle $R^{10}$ et $R^{11}$ peuvent représenter, indépendamment l'un de l'autre, un atome d'halogène, un reste alkyle en $C_1$ à $C_4$, alcoxy en $C_1$ à $C_4$, halogéno-alkyle en $C_1$ à $C_4$, phényle, N-pyrrolyle ou un groupe de formule générale (D):

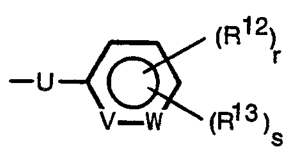

(D)

dans laquelle

$R^{12}$ et $R^{13}$ peuvent représenter, indépendamment l'un de l'autre, un atome d'hydrogène ou d'halogène, un reste alkyle en $C_1$ à $C_4$, alcoxy en $C_1$ à $C_4$ et halogénoalkyle en $C_1$ à $C_4$, U représente —$CH_2$—, >C=O, —O— ou —S—, de preférence —O—; V et W peuvent représenter CH ou N, les deux pouvant représenter simultanément CH ais ne pouvant pas représenter simultanément N,

et, dans les formules (C) et (D)

p et q sont chacun un nombre entier valant 0 à 5 à la condition que la somme (p + q) soit un nombre compris entre 1 et 5,

r et s valent chacun 0, 1 ou 2, à la condition que la somme (r + s) vale 0, 1 ou 2, et à la condition que, si $R^{10}$ ou $R^{11}$ répond au groupement (D), p et q valent chacun 0 ou 1 et la somme (p + q) vaut 1 ou 2, ou bien $R^5$ représente un groupe pyridyle de formule E

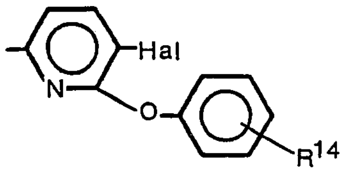

(E),

dans laquelle $R^{14}$ représente un atome d'halogène, sauf I, un reste alkyle en $C_1$ à $C_4$, alcoxy en $C_1$ à $C_4$ ou halogénoalkyle en $C_1$ à $C_4$, et Hal représente un atome d'halogène, en particulier le fluor, ou H.

2. Composés de formule I de la revendication 1, dans lesquels

$R^2$ et $R^3$ représentent chacun un reste alkyle en $C_1$ à $C_3$ ou bien $R^2$ et $R^3$ forment ensemble une chaîne alkylène en $C_3$ à $C_5$, et

$R^4$ représente H, —CN ou un reste alkyle en $C_1$ à $C_4$.

3. Composés de formule I, des revendications 1 ou 2, dans lesquels $R^1$ représente un reste pyridyle ou pyrimidyle substitué une ou deux fois, le reste pyridyle étant fixé en position 2 ou 3 et le reste pyrimidyle en position 2 ou 5 sur l'atome de Si, et les substituants $R^6$, $R^7$, $R^8$ ou $R^9$ étant en para ou en méta par rapport au point de fixation sur Si; $R^2$ et $R^3$ représentent chacun $CH_3$, $R^4$ représente H et $R^5$ représente un reste de formule

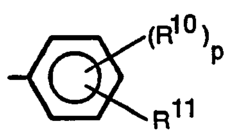

dans laquelle $(R^{10})_p$ représente H ou un atome de fluor en position 4, et $R^{11}$ représente le reste

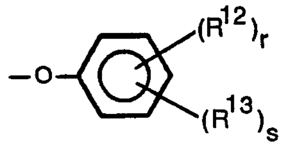

dans lequel $R^{12}$, $R^{13}$ représentent chacun un atome d'hydrogène ou d'halogène, en particulier le fluor, et la somme (r + s) vaut 0, 1 ou 2.

4. Composés de formule I des revendications 1 ou 2, dans lesquels $R^5$ représente un groupe pyridyle de formule E

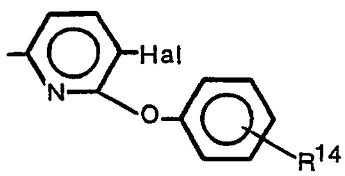

(E),

dans laquelle $R^{14}$ représente un atome d'halogène sauf I, un reste alkyle en $C_1$ à $C_4$, alcoxy en $C_1$ à $C_4$ ou halogénoalkyle en $C_1$ à $C_4$, et Hal représente un atome d'halogène, en particulier le fluor, ou H.

5. Procédé pour préparer les composés de formule I des revendications 1 à 4, caractérisé en ce que:

a) pour obtenir des composés dans lesquels X représente $CH_2$, on fait réagir un silane de formule générale (II)

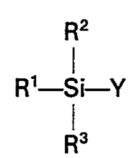

(dans laquelle Y représente un groupe nucléofuge partant, comme par exemple un atome d'halogène ou un groupe sulfonate) avec un réactif organométallique de formule générale (III)

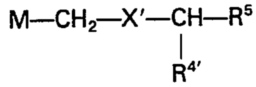

(III)

dans laquelle

M représente un équivalent de métal alcalin ou de métal alcalino-terreux,

X' représente un groupe méthylène et $R^{4'}$ représente H ou un reste alkyle en $C_1$ à $C_4$, ou

b) on fait réagir un silane de formules générales (IV) ou (V)

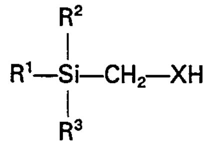
(IV)

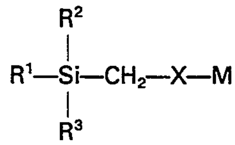
(V)

avec un agent d'alkylation de formule générale (VI)

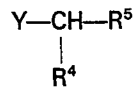
(VI)

en opérant éventuellement en présence d'une base, ou

c) on fait réagir un silane de formule générale (VII)

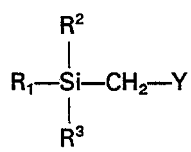
(VII)

avec un composé à XH acide du type (VIII)

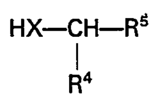
(VIII)

en présence d'une base, ou avec un composé organométallique de type IX,

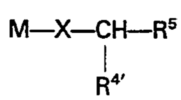
(IX)

ou bien

d) pour obtenir des composés dans lesquels X représente $CH_2$, on fait réagir un silane de formule générale (X)

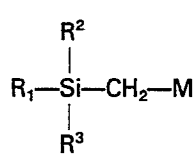
(X)

avec un composé du type (XI)

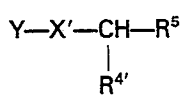
(XI)

ou bien

e) pour obtenir des composés dans lesquels X représente $CH_2$, on fait réagir un silane de formule générale (XII)

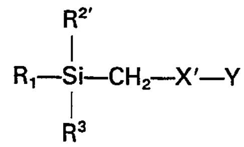

(XII)

avec un composé organo-métallique de formule générale (XIII)

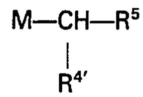

(XIII)

ou bien

f) on fait réagir un silane de formule générale (XIV)

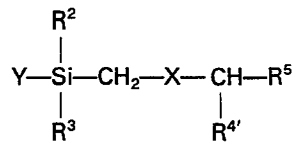

(XIV)

avec un réactif organo-métallique du type (XV)

$$R^1—M \qquad (XV)$$

ou bien

g) on fait réagir un silane de formule générale (XVI)

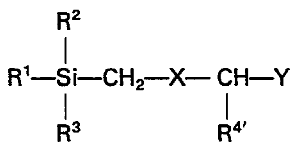

(XVI)

avec un réactif organo-métallique du type (XVII)

$$M—R^5 \qquad (XVII)$$

éventuellement en présence de catalyseurs à base de métaux de transition du sous-groupe I ou VIII, ou bien

h) pour obtenir des composés dans lesquels $X_2$ représente $H_2$, on fait réagir un silane de formule générale (XXX)

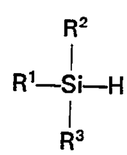

(XXX)

avec une oléfine de formule générale (XXXI)

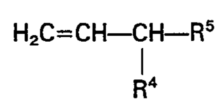

en présence d'un composé complexe d'un élément du sous-groupe VIII du système ou tableau périodique, comme catalyseur, ou bien

i) pour obtenir des composés dans lesquels X représente 0, on fait réagir un silane de formule générale (XXXII)

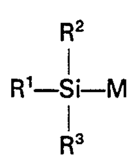

(XXXII)

avec un agent d'alkylation de formule générale (XXXIII)

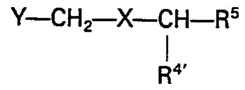

(XXXIII)

6. Pesticides, caractérisés en ce qu'ils contiennent un composé répondant à la formule I selon les revendications 1, 2, 3 ou 4.

7. Produits insecticides, caractérisés en ce qu'ils contiennent un composé de formule I selon les revendications 1, 2, 3 ou 4.

8. Produits acaracides, caractérisés en ce qu'ils contiennent un composé de formule I selon les revendications 1, 2, 3 ou 4.

9. Produits nématicides, caractérisés en ce qu'ils contiennent un composé de formule I, selon les revendications 1, 2, 3 ou 4.

10. Utilisation de composés de la formule I des revendications 1, 2, 3 ou 4, comme pesticides ou produits phytosanitaires pour lutter contre les parasites.

11. Procédé pour lutter contre les insectes nuisibles, les acariens ou les nématodes, procédé caractérisé en ce qu'on applique sur ces animaux, sur les surfaces, les plantes ou les substrats attaqués par ces animaux une quantité efficace d'un composé de formule I selon les revendications 1, 2, 3 ou 4.

**Revendications pour les Etats contractants: AT ES**

1. Procédé pour préparer des composés de formule I

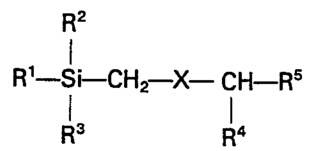

(I),

formule dans laquelle

X représente $CH_2$ ou O,

$R^1$ représente un reste pyridyle ou pyrimidyle répondant aux formules (A) ou (B)

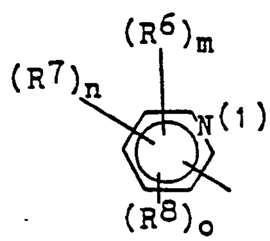

(A)

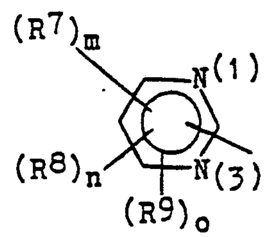

(B)

dans lesquelles

les symboles m, n et o représentent chacun un nombre valant 0 à 2, à la condition que $0 \leq m + n + o \leq 3$,

$R^6$, $R^7$, $R^8$ et $R^9$ représentent chacun, indépendamment l'un de l'autre, un atome d'halogène, un reste alkyle en $C_1$ à $C_4$, alcoxy en $C_1$ à $C_3$, halogéno-alkyle en $C_1$ à $C_3$ ou halogéno-alcoxy en $C_1$ à $C_3$, ou bien deux des restes $R^6$, $R^7$, $R^8$ et $R^9$, quand ils sont en ortho l'un par rapport à l'autre, forment un reste méthylènedioxy, éthylènedioxy ou alkylène en $C_3$ à $C_5$,

$R^2$ et $R^3$ représentent chacun un reste alkyle en $C_1$ à $C_3$, alcényle en $C_2$ à $C_8$ ou bien $R_2$ et $R_3$ forment une chaîne alkylène qui, avec l'atome de silicium, donne un hétérocycle comportant 4 à 6 chaînons (tétragonal à hexagonal), non substitué ou substitué par un ou des groupes alkyles en $C_1$ à $C_4$,

$R^4$ représente —H, —CN, —$CCl_3$, —C≡CH, un reste alkyle en $C_1$ à $C_4$, F,

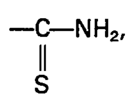

et

$R^5$ représente un reste phényle substitué de formule (C)

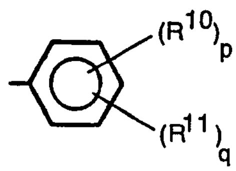

(C)

dans laquelle $R^{10}$ et $R^{11}$ peuvent représenter, indépendamment l'un de l'autre, un atome d'halogène, un reste alkyle en $C_1$ à $C_4$, alcoxy en $C_1$ à $C_4$, halogéno-alkyle en $C_1$ à $C_4$, phényle, N-pyrrolyle ou un groupe de formule générale (D):

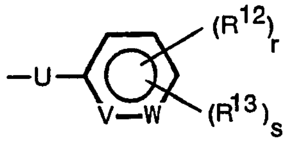

(D)

dans laquelle

$R^{12}$ et $R^{13}$ peuvent représenter, indépendamment l'un de l'autre, un atome d'hydrogène ou d'halogène, un reste alkyle en $C_1$ à $C_4$, alcoxy en $C_1$ à $C_4$ et halogénoalkyle en $C_1$ à $C_4$, U représente —$CH_2$—, C=O, —O— ou —S—, de preférence —O—; V et W peuvent représenter CH ou N, les deux pouvant représenter simultanément CH ais ne pouvant pas représenter simultanément N,

et, dans les formules (C) et (D)

p et q sont chacun un nombre entier valant 0 à 5 à la condition que la somme (p + q) soit un nombre compris entre 1 et 5,

r et s valent chacun 0, 1 ou 2, à la condition que la somme (r + s) vale 0, 1 ou 2, et à la condition que, si $R^{10}$ ou $R^{11}$ répond au groupement (D), p et q valent chacun 0 ou 1 et la somme (p + q) vaut 1 ou 2, ou bien $R^5$ représente un groupe pyridyle de formule E

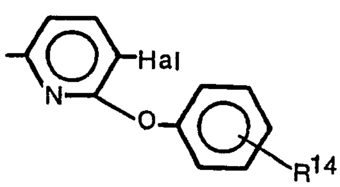

(E),

dans laquelle $R^{14}$ représente un atome d'halogène, sauf I, un reste alkyle en $C_1$ à $C_4$, alcoxy en $C_1$ à $C_4$ ou halogénoalkyle en $C_1$ à $C_4$, et Hal représente un atome d'halogène, en particulier le fluor, ou H,

a) pour obtenir des composés dans lesquels X représente $CH_2$, on fait réagir un silane de formule générale (II)

$$R^1{-}\underset{R^3}{\overset{R^2}{\mathrm{Si}}}{-}Y$$

(dans laquelle Y représente un groupe nucléofuge partant, comme par exemple un atome d'halogène ou un groupe sulfonate) avec un réactif organométallique de formule générale (III)

$$M{-}CH_2{-}X'{-}\underset{R^{4'}}{CH}{-}R^5 \qquad (III)$$

dans laquelle

M représente un équivalent de métal alcalin ou de métal alcalino-terreux,

X' représente un groupe méthylène et $R^{4'}$ représente H ou un reste alkyle en $C_1$ à $C_4$, ou

b) on fait réagir un silane de formules générales (IV) ou (V)

$$R^1{-}\underset{R^3}{\overset{R^2}{\mathrm{Si}}}{-}CH_2{-}XH \qquad (IV)$$

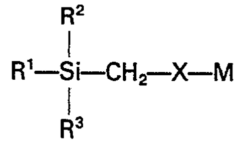

(V)

avec un agent d'alkylation de formule générale (VI)

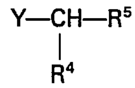

(VI)

en opérant éventuellement en présence d'une base, ou

c) on fait réagir un silane de formule générale (VII)

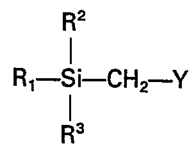

(VII)

avec un composé à XH acide du type (VIII)

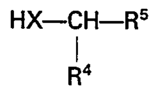

(VIII)

en présence d'une base, ou avec un composé organométallique de type IX,

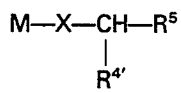

(IX)

ou bien

d) pour obtenir des composés dans lesquels X représente $CH_2$, on fait réagir un silane de formule générale (X)

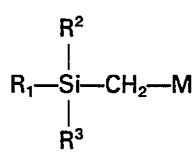

(X)

avec un composé du type (XI)

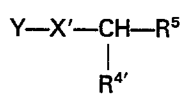

(XI)

ou bien

e) pour obtenir des composés dans lesquels X représente $CH_2$, on fait réagir un silane de formule générale (XII)

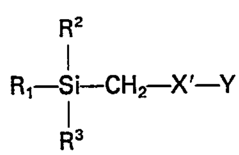

(XII)

avec un composé organo-métallique de formule générale (XIII)

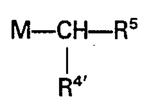

(XIII)

ou bien

f) on fait réagir un silane de formule générale (XIV)

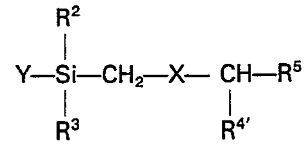

(XIV)

avec un réactif organo-métallique du type (XV)

$$R^1—M \qquad (XV)$$

ou bien

g) on fait réagir un silane de formule générale (XVI)

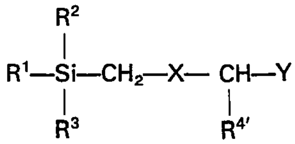

(XVI)

avec un réactif organo-métallique du type (XVII)

$$M—R^5 \qquad (XVII)$$

éventuellement en présence de catalyseurs à base de métaux de transition du sous-groupe I ou VIII, ou bien

h) pour obtenir des composés dans lesquels $X_2$ représente $H_2$, on fait réagir un silane de formule générale (XXX)

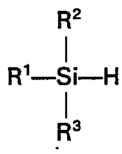

(XXX)

avec une oléfine de formule générale (XXXI)

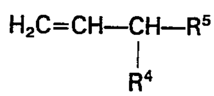

en présence d'un composé complexe d'un élément du sous-groupe VIII du système ou tableau périodique, comme catalyseur, ou bien

i) pour obtenir des composés dans lesquels X représente 0, on fait réagir un silane de formule générale (XXXII)

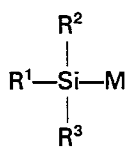

(XXXII)

avec un agent d'alkylation de formule générale (XXXIII)

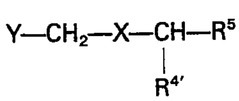

(XXXIII)

2. Procédé selon la revendication 1 pour obtenir des composés répondant à la formule I selon la revendication 1, dans lesquels $R^1$ représente un reste pyridyle ou pyrimidyle substitué une ou deux fois, le reste pyridyle étant fixé en position 2 ou 3 et le reste pyrimidyle en position 2 ou 5 sur l'atome de silicium, et les substituants $R^6$, $R^7$, $R^8$ ou $R^9$ étant en para ou en méta par rapport au point de fixation de Si; $R^2$ et $R^3$ représentent chacun $CH_3$, $R^4$ représente H et $R^5$ représente un reste de formule

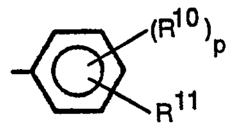

dans laquelle $(R^{10})_p$ représente H ou un atome de fluor fixé en position 4, et $R^{11}$ représente le reste

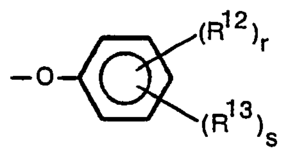

dans lequel $R^{12}$ et $R^{13}$ représentent chacun H ou un atome d'halogène, en particulier le fluor, et la somme (r + s) vaut 0, 1 ou 2.

3. Procédé selon la revendication 1 pour obtenir des composés de formule I selon la revendication 1, dans lesquels $R^5$ représente un groupe pyridyle de formule E

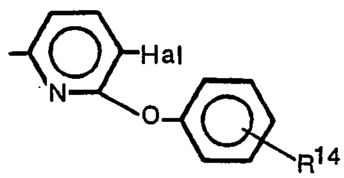

(E),

dans laquelle $R^{14}$ représente un atome d'halogène sauf I, un reste alkyle en $C_1$ à $C_4$, un reste alcoxy en $C_1$ à $C_4$ ou halogéno-alkyle en $C_1$ à $C_4$, et Hal représente un atome d'halogène, en particulier le fluor, ou H.

4. Pesticides, caractérisés en ce qu'ils contiennent un composé de formule I selon les revendications 1, 2 ou 3.

5. Insecticides, caractérisés en ce qu'ils contiennent un composé de formule I selon les revendications 1, 2 ou 3.

6. Produits acaracides, caractérisés en ce qu'ils contiennent un composé de formule I selon les revendications 1, 2 ou 3.

7. Produits nématicides, caractérisés en ce qu'ils contiennent un composé de formule I selon les revendications 1, 2 ou 3.

8. Utilisation des composés de formule I selon les revendications 1, 2 ou 3, comme pesticides.

9. Procédé pour lutter contre les insectes nuisibles, les acariens ou les nématodes, caractérisé en ce qu'on applique sur ces animaux, sur les surfaces, les plantes ou les substrats que ces animaux attaquent une quantité efficace d'un composé de formule I selon les revendications 1, 2 ou 3.

**Claims for the Contracting States: BE CH DE FR GB GR IT LI NL**

1. A compound of the formula I, the optical isomers thereof, and the mixtures of these,

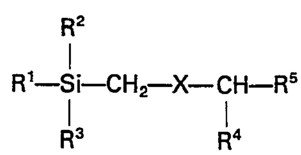

(I)

in which

X denotes $CH_2$ or O,

$R^1$ denotes a pyridyl or pyrimidyl radical of the formulae

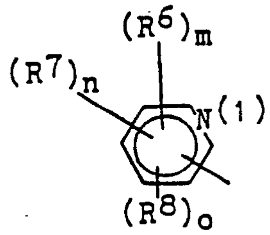
(A)

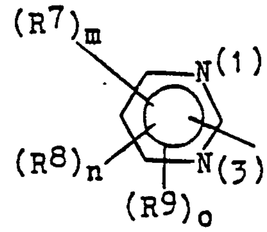
(B)

in which

m, n and o denote a number from 0 to 2, with the proviso that $0 \leq m + n + o \leq 3$,

$R^6$, $R^7$, $R^8$ and $R^9$, independently of one another, denote halogen, $(C_1—C_4)$alkyl, $(C_1—C_3)$alkoxy, $(C_1—C_3)$haloalkyl or $(C_1—C_3)$haloalkoxy, or two of the radicals $R^6$, $R^7$, $R^8$ and $R^9$, if they are in the ortho-position to one another, form a methylenedioxy, ethylenedioxy or $(C_3—C_5)$alkylene radical,

$R^2$ and $R^3$ denote $(C_1—C_3)$alkyl, $(C_2—C_8)$alkenyl, or $R^2$ and $R^3$ denote an alkylene chain which — together with the silicon atom — produces an unsubstituted or $(C_1—C_4)$alkyl-substituted heterocycle having four to six ring members,

$R^4$ denotes —H, —CN, $—CCl_3$, —C=CH, $(C_1—C_4)$alkyl, F or

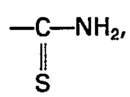

and

$R^5$ denotes a substituted phenyl radical of the formula (C)

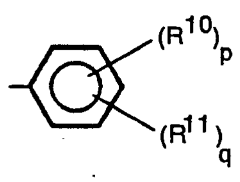
(C)

in which $R^{10}$ and $R^{11}$ — independently of one another — can denote halogen, $(C_1—C_4)$alkyl, $(C_1—C_4)$alkoxy, $(C_1—C_4)$haloalkyl, phenyl, N-pyrrolyl or a group of the general formula (D)

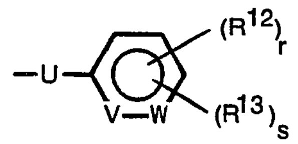
(D)

in which

$R^{12}$ and $R^{13}$ — independently of one another — can denote H, halogen, $(C_1—C_4)$alkyl, $(C_1—C_4$-alkoxy and $(C_1—C_4)$haloalkyl,

U represents $—CH_2—$, >C=O, —O— or —S—, preferably —O—;

V and W represent CH or N, where both radicals V and W can simultaneously denote CH but cannot simultaneously denote N,

and where, in the formulae (C) and (D),

p and q denote an integer from 0 to 5, with the condition that the sum of p + q must denote a number from 1 to 5,

r and s denote 0, 1 or 2, with the condition that the sum of r + s must be 0, 1 or 2, and with the condition that, if $R^{10}$ or $R^{11}$ corresponds to the group (D), p and q must denote 0 or 1 and p + q must denote 1 or 2, or

$R^5$ denotes a pyridyl group of the formula E

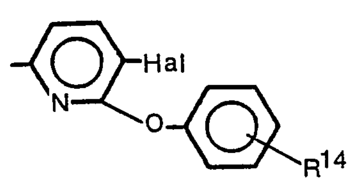
(E),

in which

$R^{14}$ denotes halogen apart from I, ($C_1$—$C_4$)alkyl, ($C_1$—$C_4$)alkoxy or ($C_1$—$C_4$)haloalkyl, and

Hal denotes hydrogen, especially fluorine, or H.

2. A compound of the formula I as claimed in claim 1, in which

$R^2$ and $R^3$ denote ($C_1$—$C_3$)alkyl or $R^2$ and $R^3$, together, denote a ($C_3$—$C_5$)alkylene chain, and

$R^4$ denotes H, —CN or ($C_1$—$C_4$)alkyl.

3. A compound of the formula I as claimed in claim 1 or 2, in which $R^1$ denotes a monosubstituted or disubstituted pyridyl or pyrimidyl radical, where the pyridyl radical is bound in position 2 or 3 and the pyrimidyl radical in position 2 or 5 on the 'silicon atom', and the substituents $R^6$, $R^7$, $R^8$ or $R^9$ are oriented in the para or meta position to the Si linking point; $R^2$ and $R^3$ denote $CH_3$, $R^4$ denotes H and $R^5$ denotes a radical of the formula

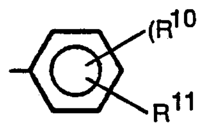

where $(R^{10})_p$ denotes H or 4-fluorine and $R^{11}$ denotes the radical

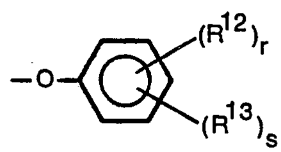

where $R^{12}$ and $R^{13}$ denote hydrogen or halogen, in particular fluorine, and r + s denotes 0, 1 or 2.

4. A compound of the formula I as claimed in claim 1 or 2, in which $R^5$ denotes a pyridyl group of the formula E

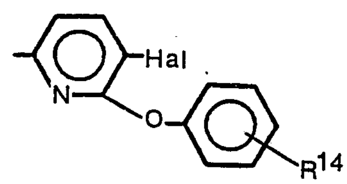

(E),

in which $R^{14}$ denotes halogen apart from I, ($C_1$—$C_4$)-alkyl, ($C_1$—$C_4$)alkoxy or ($C_1$—$C_4$)haloalkyl, and Hal denotes halogen, in particular fluorine, or H.

5. A process for the preparation of the compounds of the formula I as claimed in claims 1 to 4, which comprises

a) for compounds where X = $CH_2$, reacting a silane of the general formula (II),

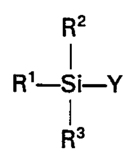

in which Y denotes a nucleofugic leaving group such as, for example, halogen or sulfonate, with an organometallic reagent of the general formula (III),

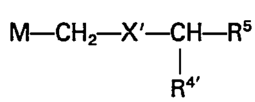

(III)

in which

M denotes an alkali metal or alkaline earth metal equivalent,

X' denotes a methylene group, and

$R^{4'}$ denotes H or ($C_1$—$C_4$)alkyl, or

b) reacting a silane of the general formula (IV) or (V)

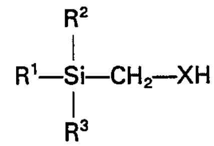
(IV)

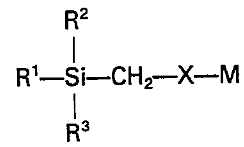
(V)

with an alkylating agent of the general formula VI

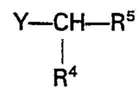
(VI)

if appropriate in the presence of a base, or

c) reacting a silane of the general formula (VII)

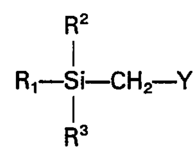
(VII)

with a XH-acidic compound of the type (VIII)

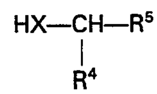
(VIII)

in the presence of a base, or with an organometallic compound of the type (IX)

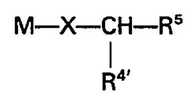
(IX)

or

d) for compounds where X = $CH_2$, reacting a silane of the general formula (X)

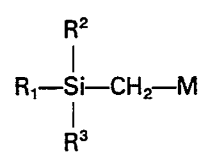
(X)

with a compound of the type (XI)

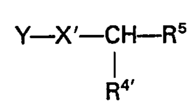
(XI)

or

e) for compounds where X = $CH_2$, reacting a silane of the general formula (XII)

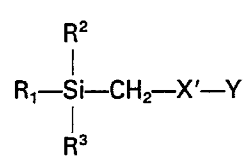
(XII)

with an organometallic compound of the general formula (XIII)

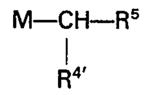

(XIII)

or

f) reacting a silane of the general formula (XIV)

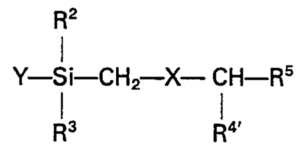

(XIV)

with an organometallic reagent of the type (XV)

$R^1$—M (XV)

or

g) reacting a silane of the general formula (XVI)

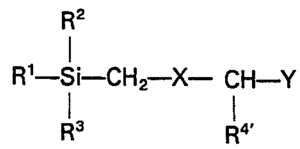

(XVI)

with an organometallic reagent of the type (XVII)

M—$R^5$ (XVII)

if appropriate, in the presence of transition metal catalysts of subgroup I or VIII or

h) for compounds where X = $CH_2$, reacting a silane of the general formula (XXX)

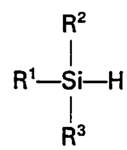

(XXX)

with an olefin of the general formula (XXXI)

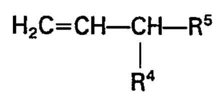

in the presence of a complex compound of an element of subgroup VIII of the periodic system as catalyst or

i) for compounds where X = O, reacting a silane of the general formula (XXXII)

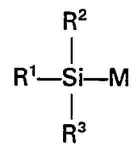

(XXXII)

with an alkylating agent of the general formula (XXXIII)

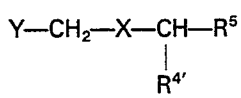

(XXXIII)

6. A pesticide which contains a compound of the formula I as claimed in claims 1, 2, 3 or 4.

7. An insecticide which contains a compound of the formula I as claimed in claims 1, 2, 3 or 4.

8. An acaricide which contains a compound of the formula I as claimed in claims 1, 2, 3 or 4.

9. A nematocide which contains a compound of the formula I as claimed in claims 1, 2, 3 or 4.

10. The use of compounds of the formula I, as claimed in claims 1, 2, 3 or 4 as pesticides.

11. A process for combating insect pests, acarids or nematodes, wherein an effective amount of a compound of the formula I as claimed in claims 1, 2, 3 or 4 is applied to these and the surfaces, plants or substrates infected by them.

**Claims for the Contracting States: AT ES**

1. A process for the preparation of a compound of the formula I,

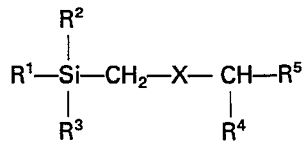 (I),

in which

X denotes $CH_2$ or O,

$R^1$ denotes a pyridyl or pyrimidyl radical of the formulae (A) or (B),

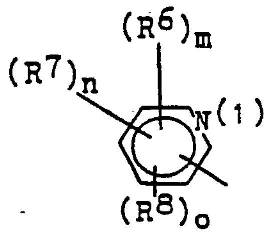

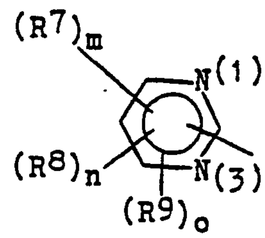

(A) (B)

in which

m, n and o denote a number from 0 to 2, with the proviso that $0 \leq m + n + o \leq 3$,

$R^6$, $R^7$, $R^8$ and $R^9$, independently of one another, denote halogen, $(C_1—C_4)$alkyl, $(C_1—C_3)$alkoxy, $(C_1—C_3)$haloalkyl or $(C_1—C_3)$haloalkoxy, or two of the radicals $R^6$, $R^7$, $R^8$ and $R^9$, if they are in the ortho-position to one another, form a methylenedioxy, ethylenedioxy or $(C_3—C_5)$alkylene radical,

$R^2$ and $R^3$ denote $(C_1—C_3)$alkyl, $(C_2—C_8)$alkenyl, or $R^2$ and $R^3$ denote an alkylene chain which — together with the silicon atom — produces an unsubstituted or $(C_1—C_4)$alkyl-substituted heterocycle having four to six ring members,

$R^4$ denotes —H, —CN, $—CCl_3$, —C≡CH, $(C_1—C_4)$alkyl, F or

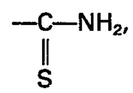

and

$R^5$ denotes a substituted phenyl radical of the formula (C)

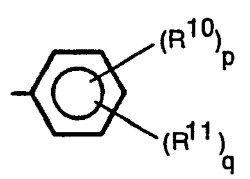 (C)

in which $R^{10}$ and $R^{11}$ — independently of one another — can denote halogen, $(C_1—C_4)$alkyl, $(C_1—C_4)$alkoxy, $(C_1—C_4)$haloalkyl, phenyl, N-pyrrolyl or a group of the general formula (D)

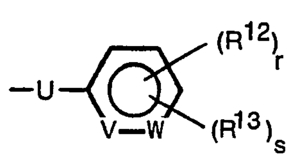 (D)

in which

$R^{12}$ and $R^{13}$ — independently of one another — can denote H, halogen, $(C_1—C_4)$alkyl, $(C_1—C_4$-alkoxy and $(C_1—C_4)$haloalkyl,

U represents $—CH_2—$, >C=O, —O— or —S—, preferably —O—;

V and W represent CH or N, where both radicals V and W can simultaneously denote CH but cannot simultaneously denote N,

p and q denote an integer from 0 to 5, with the condition that the sum of p + q must denote a number from 1 to 5,

r and s denote 0, 1 or 2, with the condition that the sum of r + s must be 0, 1 or 2, and with the condition that, if $R^{10}$ or $R^{11}$ corresponds to the group (D), p and q must denote 0 or 1 and p + q must denote 1 or 2, or

$R^5$ denotes a pyridyl group of the formula E

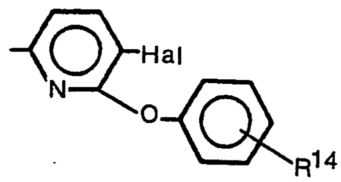

(E),

in which

$R^{14}$ denotes halogen apart from I, $(C_1—C_4)$alkyl, $(C_1—C_4)$alkoxy or $(C_1—C_4)$haloalkyl, and

Hal denotes hydrogen, especially fluorine, or H, which comprises

a) for compounds where X = $CH_2$, reacting a silane of the general formula (II),

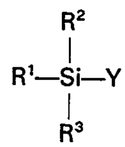

in which Y denotes a nucleofugic leaving group such as, for example, halogen or sulfonate, with an organometallic reagent of the general formula (III),

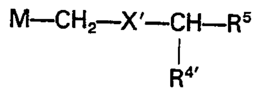

(III)

in which

M denotes an alkali metal or alkaline earth metal equivalent,

X′ denotes a methylene group, and

$R^{4'}$ denotes H or $(C_1—C_4)$alkyl, or

b) reacting a silane of the general formula (IV) or (V)

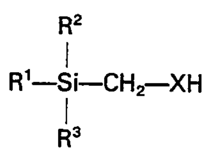

(IV)

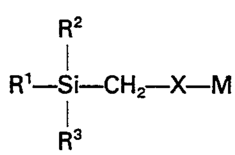

(V)

with an alkylating agent of the general formula VI

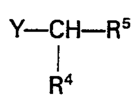

(VI)

if appropriate in the presence of a base, or

c) reacting a silane of the general formula (VII)

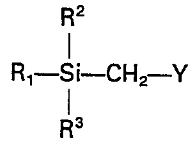

(VII)

with a XH-acidic compound of the type (VIII)

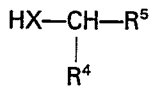

(VIII)

in the presence of a base, or with an organometallic compound of the type (IX)

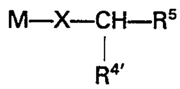

(IX)

or

d) for compounds where X = $CH_2$, reacting a silane of the general formula (X)

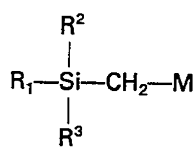

(X)

with a compound of the type (XI)

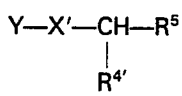

(XI)

or

e) for compounds where X = $CH_2$, reacting a silane of the general formula (XII)

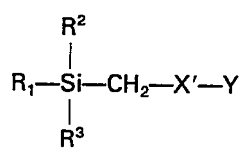

(XII)

with an organometallic compound of the general formula (XIII)

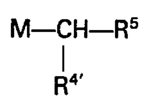

(XIII)

or

f) reacting a silane of the general formula (XIV)

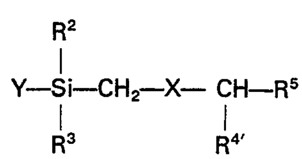

(XIV)

with an organometallic reagent of the type (XV)

$R^1$—M (XV)

or

g) reacting a silane of the general formula (XVI)

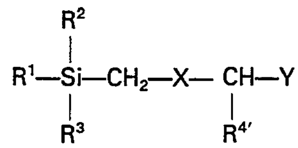

(XVI)

with an organometallic reagent of the type (XVII)

$$M—R^5$$ (XVII)

if appropriate, in the presence of transition metal catalysts of subgroup I or VIII or

h) for compounds where $X = CH_2$, reacting a silane of the general formula (XXX)

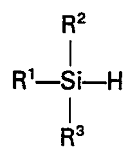

(XXX)

with an olefin of the general formula (XXXI)

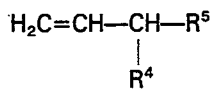

in the presence of a complex compound of an element of subgroup VIII of the periodic system as catalyst or

i) for compounds where X = O, reacting a silane of the general formula (XXXII)

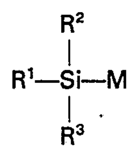

(XXXII)

with an alkylating agent of the general formula (XXXIII)

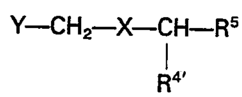

(XXXIII).

2. The process as claimed in claim 1 for a compound of the formula I as claimed in claim 1, wherein $R^1$ denotes a monosubstituted or disubstituted pyridyl or pyrimidyl radical, where the pyridyl radical is bound in position 2 or 3 and the pyrimidyl radical in position 2 or 5 on the Si atom, and the substituents $R^6$, $R^7$, $R^8$ or $R^9$ are oriented in the para or meta position to the Si linking point; $R^2$ and $R^3$ denote $CH_3$, $R^4$ denotes H and $R^5$ denotes a radical of the formula

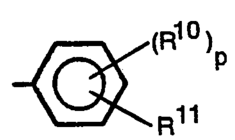

where $(R^{10})_p$ denotes H or 4-fluorine and $R^{11}$ denotes the radical

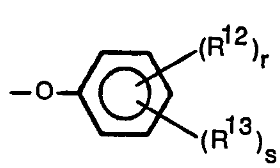

where $R^{12}$ and $R^{13}$ denote H or halogen, in particular fluorine, and r + s denotes 0, 1 or 2.

3. The process as claimed in claim 1 for a compound of the formula I as claimed in claim 1, wherein $R^5$ denotes a pyridyl group of the formula E

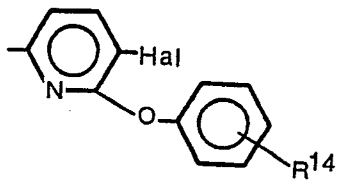

(E),

in which $R^{14}$ denotes halogen, apart from I, $(C_1—C_4)$alkyl, $(C_1—C_4)$alkoxy or $(C_1—C_4)$haloalkyl, and Hal denotes halogen, in particular fluorine, or H.

4. A pesticide which contains a compound of the formula I as claimed in claims 1, 2 or 3.

5. An insecticide which contains a compound of the formula I as claimed in claims 1, 2 or 3.

6. An acaricide which contains a compound of the formula I as claimed in claims 1, 2 or 3.

7. A nematocide which contains a compound of the formula I as claimed in claims 1, 2 or 3.

8. The use of compounds of the formula I, as claimed in claims 1, 2 or 3.

9. A process for combating insect pests, acarids or nematodes, wherein an effective amount of a compound of the formula I as claimed in claims 1, 2 or 3 is applied to these and the surfaces, plants or substrates infected by them.